# EUROPÄISCHE PATENTSCHRIFT

(11) **EP 1 286 434 B1**
(45) Veröffentlichungstag und Bekanntmachung des Hinweises auf die Patenterteilung: **23.06.2004**
(21) Anmeldenummer: 02017343.1
(22) Anmeldetag: 02.08.2002
(51) Int. Cl.: H01S 3/23, H01S 3/06, H01S 3/081

(54) **Laserverstärkersystem**
Laser amplifier system
Système amplificateur de laser

(30) Priorität: 09.08.2001 DE 10140254
(43) Veröffentlichungstag der Anmeldung: 26.02.2003
(73) Patentinhaber: TRUMPF Laser GmbH + Co.KG, 78713 Schramberg (DE)
(72) Erfinder: Kumkar, Malte, Dr., 78713 Schramberg (DE)
(74) Vertreter: HOEGER, STELLRECHT & PARTNER Patentanwälte

(56) Entgegenhaltungen:
- EP-A- 0 632 551
- WO-A-00/52520
- US-A- 3 597 695
- US-A- 5 553 088
- US-A- 6 108 357

## Beschreibung

Die Erfindung betrifft ein Laserverstärkersystem mit einem ein laseraktives Medium aufweisenden Festkörper und mit einem durch eine Strahlungsfeldführungsoptik festgelegten Strahlungsfeldsystem und ein im Strahlungsfeldsystem angeordnetes aktiv schaltbares optisches Schaltelement zum Beeinflussen der Verluste im Strahlungsfeldsystem.

Derartige Laserverstärkersysteme sind aus dem Stand der Technik bekannt, wobei üblicherweise bei einem Durchlauf durch das Strahlungsfeldsystem sowohl das optische Schaltelement als auch der das laserverstärkende Medium aufweisende Festkörper einmal durchlaufen werden.

Da ein optisches Schaltelement nie verlustfrei geschaltet werden kann, sondern stets einen Mindestverlust für dieses durchsetzende Laserstrahlung aufweist, ist dieses Konzept für Laserverstärkersysteme mit einem gering verstärkenden laseraktiven Medium problematisch.

Der Erfindung liegt daher die Aufgabe zugrunde, ein Laserverstärkersystem der gattungsgemäßen Art derart zu verbessern, daß dieses für gering verstärkende laseraktive Medien geeignet ist.

Diese Aufgabe wird bei einem Laserverstärkersystem der eingangs beschriebenen Art erfindungsgemäß dadurch gelöst, daß der Festkörper plättchenförmig ausgebildet ist, daß das Strahlungsfeldsystem einen einfallenden Ast und einen ausfallenden Ast umfaßt, die einerseits miteinander gekoppelt sind und zwischen denen andererseits ein Verstärkungsstrahlungsfeld vorgesehen ist, das aus einer Vielzahl von sich zwischen zwei optischen Strahlumkehrelementen erstreckenden Zwischenästen gebildet ist, die ihrerseits alle den Festkörper in Richtung quer zu seinen Flachseiten und innerhalb eines Volumenbereichs durchsetzen, wobei der aktive Volumenbereich in Richtungen quer zu Strahlachsen der Zwischenäste eine Ausdehnung aufweist, welche maximal einem dreifachen der mittleren Ausdehnung der Strahlungsfeldquerschnitte der im aktiven Volumenbereich liegenden Volumenabschnitte der Zwischenäste entspricht.

Der Vorteil der erfindungsgemäßen Lösung ist somit darin zu sehen, daß durch das Vorsehen des Verstärkerstrahlungsfeldes mit den Zwischenästen eine hohe Verstärkung mit mehrfachem Durchlauf durch den plättchenförmigen Festkörper möglich ist, ohne daß jeweils die Verluste des aktiv schaltbaren optischen Elements sich negativ auf die Verstärkung auswirken und die Strahlqualität leidet.

Darüber hinaus ist der Vorteil der erfindungsgemäßen Lösung außerdem noch darin zu sehen, daß mit dieser eine große optische Weglänge des Verstärkerstrahlungsfeldes zwischen dem jeweiligen Durchlaufen des Schaltelements realisierbar ist, so daß dadurch die Möglichkeit besteht, ein Schaltelement einzusetzen, das langsam, beispielsweise im Mikrosekundenbereich mit Schaltflanken im Bereich von mehr als zehn Nanosekunden, arbeitet.

Unter einem dünnen plättchenförmigen Festkörper ist erfindungsgemäß ein Festkörper zu verstehen, dessen Flachseiten eine Ausdehnung haben, die mindestens das Zehnfache, noch besser das Hundertfache der Dicke desselben betragen.

Üblicherweise einsetzbare plättchenförmige Festkörper sind beispielsweise in der europäischen Patentanmeldung 0 632 551 beschrieben.

Hinsichtlich der Anordnung des aktiv schaltbaren optischen Schaltelements sind die unterschiedlichsten Möglichkeiten denkbar. Beispielsweise wäre es prinzipiell denkbar, das aktiv schaltbare optische Schaltelement in einem der Zwischenäste des Verstärkerstrahlungsfeldes anzuordnen.

Besonders günstig ist es, wenn das aktiv schaltbare optische Schaltelement außerhalb des Verstärkerstrahlungsfeldes angeordnet ist.

Eine vorteilhafte Lösung sieht dabei vor, daß das aktiv schaltbare optische Schaltelement im einfallenden oder ausfallenden Ast des Strahlungsfeldsystems angeordnet ist.

Prinzipiell ist es bei der erfindungsgemäßen Lösung ausreichend, ein Verstärkerstrahlungsfeld mit einer Vielzahl von Zwischenästen vorzusehen. Soll jedoch die optische Weglänge des Strahlungsfeldsystems maximiert werden, so ist es auch denkbar, daß das Strahlungsfeldsystem mindestens zwei Verstärkerstrahlungsfelder aufweist und daß jedem Verstärkerstrahlungsfeld zwei Strahlumkehrelemente zugeordnet sind, wobei beide Verstärkerstrahlungsfelder sich auch zwischen denselben Strahlumlenkelementen erstrecken können.

Hinsichtlich der Zahl der ein laseraktives Medium aufweisenden Volumenbereiche ist es beim Vorsehen mehrerer Verstärkerstrahlungsfelder ebenfalls vorteilhaft, wenn den verschiedenen Verstärkerstrahlungsfeldern verschiedene ein laseraktives Medium aufweisende Volumenbereiche zugeordnet sind.

Hinsichtlich des Aufbaus der Strahlungsfeldführungsoptik zur Festlegung des Verstärkerstrahlungsfeldes sind die unterschiedlichsten Möglichkeiten denkbar. Eine besonders günstige Lösung, insbesondere hinsichtlich der Übertragungseigenschaften von Zwischenast zu Zwischenast, sieht vor, daß jedem Verstärkerstrahlungsfeld mindestens ein zwischen den Strahlumkehrelementen angeordnetes Übertragungselement zugeordnet ist, welches vorzugsweise die Strahlachsen der Zwischenäste in einen Schnittbereich zusammenführt, in welchem diese mit ihren Strahlungsfeldquerschnitten mindestens zur Hälfte überlappen.

Noch besser ist es, wenn die Zwischenäste mit ihren Strahlungsfeldquerschnitten im Schnittbereich zu mindestens zwei Drittel, noch besser im wesentlichen überlappen.

Das Übertragungselement kann dabei ein in Transmission arbeitendes Übertragungselement sein. Besonders günstig ist es jedoch, wenn das Übertragungselement die Zwischenäste reflektierend ausgebildet ist, da sich mit einem derartigen Übertragungselement mit geringen Verlusten arbeiten läßt.

Eine besonders vorteilhafte Variante eines reflektierend ausgebildeten Übertragungselement sieht vor, daß dieses als Reflektor mit einer gekrümmten Reflexionsfläche ausgebildet ist und somit gleichzeitig ein Faltungselement für die Zwischenäste darstellt.

Das Übertragungselement kann grundsätzlich unterschiedliche Abbildungseigenschaften aufweisen. Eine besonders vorteilhafte Lösung sieht vor, daß das Übertragungselement für die Strahlachsen der Zwischenäste als kollimierend wirkendes Übertragungselement ausgebildet ist, das heißt von einem Schnittbereich ausgehende Zwischenäste nach der Abbildung parallel zueinander verlaufen läßt.

Eine Alternative ebenfalls im Rahmen der erfindungsgemäßen Lösung bevorzugte Ausführung sieht vor, daß das Übertragungselement als die Strahlachsen der Zwischenäste zweifach in einem Schnittbereich zusammenführendes Übertragungselement ausgebildet ist, das heißt, daß das Übertragungselement von einem Schnittbereich ausgehende Zwischenäste durch Abbildung wieder in einem Schnittbereich zusammenlaufen läßt.

Das Vorsehen eines auf die Zwischenäste zwischen den Strahlumkehrelementen wirkenden Übertragungselementes ist dabei keine abschließende Festlegung, es ist im Rahmen der erfindungsgemäßen Lösung, je nach den durchzuführenden Übertragung, denkbar, auch mehrere Übertragungselemente vorzusehen.

In gleicher Weise ist die Festlegung zweier Strahlumkehrelemente lediglich eine Mindestbedingung für die Festlegung des jeweiligen Verstärkerstrahlungsfeldes. Es ist im Rahmen der Erfindung auch denkbar, weitere Umlenkelemente, beispielsweise Mehrfachumlenkelemente vorzusehen.

Hinsichtlich der Strahlumkehrelemente wurden im Zusammenhang mit der bisherigen Erläuterung der einzelnen Ausführungsbeispiele keine näheren Angaben gemacht.

Die Strahlumkehrelemente sind vorzugsweise so ausgebildet, daß im Verstärkerstrahlungsfeld zumindest ein Teil der Zwischenäste weitgehend räumlich getrennt verläuft.

Eine günstige Variante sieht vor, daß Zwischenäste im wesentlichen räumlich getrennt voneinander verlaufen.

Eine andere Lösung sieht vor, daß jeweils zwei Zwischenäste geometrisch zusammenfallen, jedoch mit unterschiedlichen Strahlungsausbreitungsrichtungen verlaufen.

Beispielsweise sind die Strahlumkehrelemente mehrfach reflektierend, das heißt beispielsweise zweifach reflektierend ausgebildet und setzen einen Zwischenast in einem im Abstand zu diesem verlaufenden nächsten Zwischenast um.

Eine besonders günstige Lösung sieht jedoch vor, daß mindestens eines der Strahlumkehrelemente als einfach reflektierender Reflektor ausgebildet ist und somit durch einmalige Reflexion einen Zwischenast in den nächsten Zwischenast umsetzt, der dabei entweder geometrisch mit dem einfallenden Zwischenast zusammenfallen oder im Winkel zu diesem verlaufen kann.

Der Vorteil dieser Lösung ist einerseits der, daß die Verluste bei der Reflexion minimiert werden können. Andererseits ist der Vorteil auch der, daß dadurch in einfacher Weise ein Zwischenast in einen mit diesem geometrisch zusammenfallenden, sich jedoch in entgegengesetzter Richtung ausbreitenden Zwischenast in einfacher Weise umgesetzt werden kann.

Besonders vorteilhaft ist es dabei, wenn beide Strahlumkehrelemente als einfach reflektierende Reflektoren ausgebildet sind.

In dem Fall, in dem das Strahlumkehrelement als einfach reflektierender Reflektor ausgebildet ist, ist es besonders vorteilhaft, wenn die Zwischenäste auf dem Reflektor in einem Flächenbereich mit ihren Strahlungsfeldquerschnitten überlappend auftreffen, so daß diese ausgehend von diesem Flächenbereich, der einen Schnittbereich darstellt, zurückreflektiert werden.

Hinsichtlich des Verlaufs der Zwischenäste in dem aktiven Volumenbereich wurden im Zusammenhang mit den bisherigen Ausführungsbeispielen keine weiteren spezifischen Angaben gemacht. Besonders günstig ist es, wenn sich die Zwischenäste mit ihren den aktiven Volumenbereich durchsetzenden Volumenabschnitten im wesentlichen überlappen, um somit eine möglichst effektive Ankopplung an denselben angeregten Volumenbereich im Festkörper zu erreichen.

Besonders günstig ist diese Ankopplung dann erreichbar, wenn die Strahlungsfeldführungsoptik derart ausgebildet ist, daß die Zwischenäste im aktiven Volumenbereich jeweils eine näherungsweise ähnliche Strahlungsfeldgeometrie aufweisen und somit in möglichst effizienter Form an den laseraktiven Volumenbereich ankoppeln.

Um möglichst gute Übertragungsverhältnisse im Strahlungsfeldsystem zu erreichen, ist die Strahlungsfeldführungsoptik vorzugsweise derart ausgebildet, daß die Strahlachsen der Zwischenäste ein in einem den aktiven Volumenbereich umfassenden Raumbereich liegendes Schnittvolumen durchsetzen, welches mindestens um einen Faktor 10, noch besser einen Faktor 100, kleiner als der aktive Volumenbereich ist und dessen Ausdehnung in den einzelnen Raumrichtungen vorzugsweise um einen Faktor 10, noch besser 100 kleiner ist als die Ausdehnung des aktiven Volumenbereichs in den einzelnen Raumrichtungen.

Das heißt, daß das Schnittvolumen entweder in dem aktiven Volumenbereich oder nahe desselben liegen soll.

Um den Raumbereich zu begrenzen, in welchem vorzugsweise das Schnittvolumen liegt, ist vorzugsweise vorgesehen, daß der Raumbereich in jeder Richtung eine maximale Ausdehnung aufweist, die dem doppelten der maximalen Ausdehnung des aktiven Volumenbereichs entspricht, so daß der aktive Volumenbereich stets nahe dem Schnittvolumen liegt.

Eine besonders günstige Lösung sieht vor, daß der das laseraktive Medium aufweisende Festkörper unmittelbar vor dem Strahlumkehrelement angeordnet ist, auf welchem sich die Zwischenäste in dem Flächenbereich mit ihren Strahlungsquerschnitten überlappen.

Um möglichst optimale Verhältnisse zu erhalten, ist vorzugsweise vorgesehen, daß die Strahlungsfeldführungsoptik derart ausgebildet ist, daß die Zwischenäste mit ungefähr derselben Strahlausbreitungsrichtung innerhalb des aktiven Volumenbereichs eine identische Symmetrie mit identischer Symmetrieausrichtung aufweisen.

Das heißt, daß das Verstärkerstrahlungsfeld in diesem Fall so ausgebildet ist, daß jeder Zwischenast innerhalb des aktiven Volumenbereichs dieselbe Symmetrie aufweist und auch so ausgerichtet ist, daß die Symmetrierichtungen im wesentlichen zusammenfallen.

Ferner sieht eine vorteilhafte Lösung vor, daß die Strahlungsfeldführungsoptik derart ausgebildet ist, daß die Zwischenäste mit ungefähr derselben Strahlausbreitungsrichtung in dem aktiven Volumenbereich ungefähr dieselbe Phasenkrümmung aufweisen, so daß Phasenverzerrungen von Zwischenast zu Zwischenast vermieden werden.

Besonders günstig ist es dabei, wenn die Strahlungsfeldführungsoptik derart ausgebildet ist, daß die Zwischenäste mit ungefähr derselben Strahlausbreitungsrichtung in einem den aktiven Volumenbereich umfassenden Raumbereich liegende konjugierte Flächen aufweisen.

Vorzugsweise ist dabei der Raumbereich derart zu definieren, daß dieser in jeder Richtung eine maximale Ausdehnung aufweist, die dem doppelten der maximalen Ausdehnung des aktiven Volumenbereichs in dieser Richtung entspricht.

Besonders günstige Abbildungsverhältnisse ergeben sich außerdem dann, wenn die Strahlungsfeldführungsoptik derart ausgebildet ist, daß sich das Verstärkerstrahlungsfeld innerhalb des aktiven Volumens wie ein afokales System verhält. Um möglichst geringe Verzerrungen im Strahlungsfeld zu erreichen, ist vorzugsweise vorgesehen, daß die Strahlungsfeldführungsoptik derart ausgebildet ist, daß aus jedem der Zwischenäste ein anderer Zwischenast mit einem Abbildungsmaßstab von ungefähr eins gebildet wird.

Da bei der erfindungsgemäßen Lösung die Zahl der Zwischenäste die optische Weglänge im Verstärkerstrahlungsfeld festlegt, und diese optische Weglänge im Pulsbetrieb für die Umlaufzeiten Pulsdauer und Repetitionsfrequenz wesentlich beeinflussen, ist vorzugsweise vorgesehen, daß sich die Zahl der Zwischenäste durch Justierung der das Verstärkerstrahlungsfeld definierenden Elemente der Strahlungsfeldführungsoptik relativ zueinander einstellen läßt.

Besonders günstig läßt sich dies dann realisieren, wenn die Zahl der Zwischenäste durch Justierung eines der Strahlumkehrelemente relativ zu den anderen, stationär angeordneten Elementen der Strahlungsfeldführungsoptik einstellbar ist.

Hinsichtlich des Verlaufs des einfallenden Astes relativ zu den Elementen der Strahlungsfeldführungsoptik wurden bislang keine näheren Angaben gemacht. So sieht ein vorteilhaftes Ausführungsbeispiel vor, daß der einfallende Ast sich zwischen einem Abschlußelement der Strahlungsfeldführungsoptik und einem der zwei Strahlumkehrelemente erstreckt.

Auch hinsichtlich der Anordnung des ausfallenden Astes wurden bislang keine näheren Angaben gemacht. So ist es zweckmäßig, wenn sich der ausfallende Ast zwischen einem Abschlußelement der Strahlungsfeldführungsoptik und einem der Strahlumkehrelemente erstreckt.

Eine besonders zweckmäßige Lösung sieht vor, daß sich der einfallende Ast und der ausfallende Ast zu demselben Strahlumkehrelement hin erstrecken.

Hinsichtlich der Kopplung zwischen dem einfallenden Ast und dem ausfallenden Ast wurden bislang keine näheren Angaben gemacht. So ist die Kopplung in unterschiedlichster Art und Weise realisierbar.

Eine vorteilhafte Möglichkeit sieht vor, daß der einfallende Ast und der ausfallende Ast durch die Abschlußelemente direkt gekoppelt sind, das heißt, die Abschlußelemente so angeordnet sind, daß sie den einfallenden und den ausfallenden Ast direkt ineinander überführen.

Beispielsweise ist dies dadurch möglich, daß die Abschlußelemente den ausfallenden Ast und den einfallenden Ast durch Reflexion koppeln.

Dies ist einerseits dadurch möglich, daß der einfallende Ast und der ausfallende Ast im Abstand voneinander verlaufen und durch geeignet angeordnete reflektierende Abschlußelemente gekoppelt werden.

Eine andere Möglichkeit sieht vor, daß der einfallende Ast und der ausfallende Ast zu demselben Abschlußelement hin verlaufen und so angeordnet sind, daß sie geometrisch zusammenfallen, so daß durch Rückreflexion des ausfallenden Astes wieder der einfallende Ast entsteht.

Hinsichtlich der Ausbildung des Strahlungsfeldsystems und der Ausbreitung der Laserstrahlung im Strahlungsfeldsystem wurden bislang keine näheren Angaben gemacht.

So sieht ein vorteilhaftes Ausführungsbeispiel vor, daß Laserstrahlung das Strahlungsfeldsystem in derselben Durchlaufrichtung mehrfach durchlaufen kann.

Eine alternative Lösung hierzu sieht vor, daß das Strahlungsfeldsystem so ausgebildet ist, daß Laserstrahlung das Strahlungsfeldsystem durch Richtungsumkehr im einfallenden und/oder ausfallenden Ast in entgegengesetzten Richtungen durchlaufen kann.

Hinsichtlich der Auskopplung der Laserstrahlung aus dem Strahlungsfeldsystem wurden bislang keine näheren Angaben gemacht. So sieht ein vorteilhaftes Ausführungsbeispiel vor, daß ein Teil der Laserstrahlung im Strahlungsfeldsystem ständig auskoppelbar ist, das heißt, daß die ausgekoppelte Laserstrahlung stets einem näherungsweise konstanten Anteil der Laserstrahlung im Strahlungsfeldsystem entspricht.

Dies läßt sich beispielsweise dadurch erreichen, daß die Laserstrahlung durch ein Element der Strahlungsfeldführungsoptik auskoppelbar ist, welches beispielsweise als teildurchlässiger Spiegel ausgebildet ist.

Eine andere vorteilhafte Lösung sieht vor, daß Laserstrahlung das Strahlungsfeldsystem so lange durchläuft, bis eine aktive Auskopplung durch das optische Schaltelement erfolgt.

In diesem Fall dient das optische Schaltelement nicht nur dazu, die Verluste im Strahlungsfeldsystem zu beeinflussen, sondern gleichzeitig dazu, aktiv gesteuert Laserstrahlung aus dem Strahlungsfeldsystem auszukoppeln.

Hierzu kann das aktiv schaltbare optische Schaltelement in unterschiedlichster Art und Weise ausgebildet sein.

So sieht eine vorteilhafte Möglichkeit vor, daß das aktiv schaltbare optische Schaltelement ein polarisationsbeeinflussendes Schaltelement ist.

In diesem Fall führt vorzugsweise das polarisationsbeeinflussende Schaltelement eine Änderung der Polarisation durch, die dann in Kombination mit einem polarisationsabhängigen Reflektor zu einer vollständigen oder teilweisen aktiv gesteuerten Auskopplung von Laserstrahlung aus dem Strahlungsfeldsystem bewirkt.

Eine andere vorteilhafte Lösung sieht vor, daß das aktiv schaltbare optische Schaltelement ein strahlungsbeugendes Schaltelement ist, das heißt also die Laserstrahlung aus dem Strahlungsfeldsystem durch Beugung auskoppelt.

Beispielsweise ist dabei das aktiv schaltbare optische Schaltelement als akustooptischer Modulator ausgebildet, der durch ein Schallwellenfeld strahlungsbeugend wirkt.

Der plättchenförmige Festkörper ist weiterhin vorteilhafterweise dadurch definierbar, daß dieser eine Dicke aufweist, welche maximal einem Zehntel, noch besser einem Hundertstel seiner kleinsten Ausdehnung in Richtung einer Flachseite entspricht.

Hinsichtlich der Anordnung des Festkörpers selbst wurden im Zusammenhang mit der bisherigen Erläuterung der erfindungsgemäßen Lösung keine näheren Angaben gemacht. So sieht eine besonders günstige Lösung vor, daß der Festkörper über eine Flachseite durch eine Wärmesenke gekühlt ist, um thermische Spannungen und eine thermische Linsenbildung in diesem zu verhindern.

Beispielsweise ist die Wärmesenke ein Kühlmedium oder ein Kühlkörper. Vorzugsweise ist dabei der Festkörper auf einem Kühlkörper angeordnet und von diesem getragen.

Das laseraktive Medium in dem Festkörper ist vorzugsweise ein laseraktives Material mit einer geringen Verstärkung, wie beispielsweise im Europäischen Patent 0 632 551 beschrieben.

Ferner weist der Festkörper vorzugsweise ein laseraktives Material mit einer hohen Sättigungsintensität auf, wie beispielsweise im Europäischen Patent 0 632 551 beschrieben.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine schematische Darstellung eines ersten Ausführungsbeispiels eines erfindungsgemäßen Laserverstärkersystems;
- Fig. 2: eine ausschnittsweise schematische Darstellung des Bereichs A in Fig. 1;
- Fig. 3: eine schematische Darstellung ähnlich Fig. 1 eines zweiten Ausführungsbeispiels eines erfindungsgemäßen Laserverstärkersystems;
- Fig. 4: eine schematische Darstellung ähnlich Fig. 1 eines dritten Ausführungsbeispiels eines erfindungsgemäßen Laserverstärkersystems;
- Fig. 5: eine schematische Darstellung ähnlich Fig. 1 eines vierten Ausführungsbeispiels eines erfindungsgemäßen Laserverstärkersystems;
- Fig. 6: eine Darstellung des vierten Ausführungsbeispiels gemäß Fig. 5 mit verringerter Zahl der Zwischenäste;
- Fig. 7: eine schematische Darstellung ähnlich Fig. 5 eines fünften Ausführungsbeispiels;
- Fig. 8: eine schematische Darstellung ähnlich Fig. 1 eines sechsten Ausführungsbeispiels;
- Fig. 9: eine schematische Darstellung ähnlich Fig. 1 eines siebten Ausführungsbeispiels;
- Fig. 10: eine schematische Darstellung ähnlich Fig. 9 eines achten Ausführungsbeispiels;
- Fig. 11: eine schematische Darstellung ähnlich Fig. 10 eines neunten Ausführungsbeispiels;
- Fig. 12: eine schematische Darstellung ähnlich Fig. 10 eines zehnten Ausführungsbeispiels;
- Fig. 13: eine schematische Darstellung ähnlich Fig. 5 eines elften Ausführungsbeispiels;
- Fig. 14: eine schematische Darstellung einer ersten möglichen Betriebsweise des erfindungsgemäßen Laservertstärkersystems im Pulsbetrieb;
- Fig. 15: eine schematische Darstellung einer zweiten möglichen Betriebsweise des erfindungsgemäßen Laserverstärkersystems im Pulsbetrieb;
- Fig. 16: eine schematische Darstellung einer dritten möglichen Betriebsweise des erfindungsgemäßen Laserverstärkersystems im Pulsbetrieb;
- Fig. 17: eine schematische Darstellung einer vierten möglichen Betriebsweise des erfindungsgemäßen Laserverstärkersystems im Pulsbetrieb;
- Fig. 18: eine schematische Darstellung einer fünften möglichen Betriebsweise des erfindungsgemäßen Laserverstärkersystems im Pulsbetrieb und
- Fig. 19: eine schematische Darstellung einer sechsten möglichen Betriebsweise des erfindungsgemäßen Laserverstärkersystems im Pulsbetrieb.

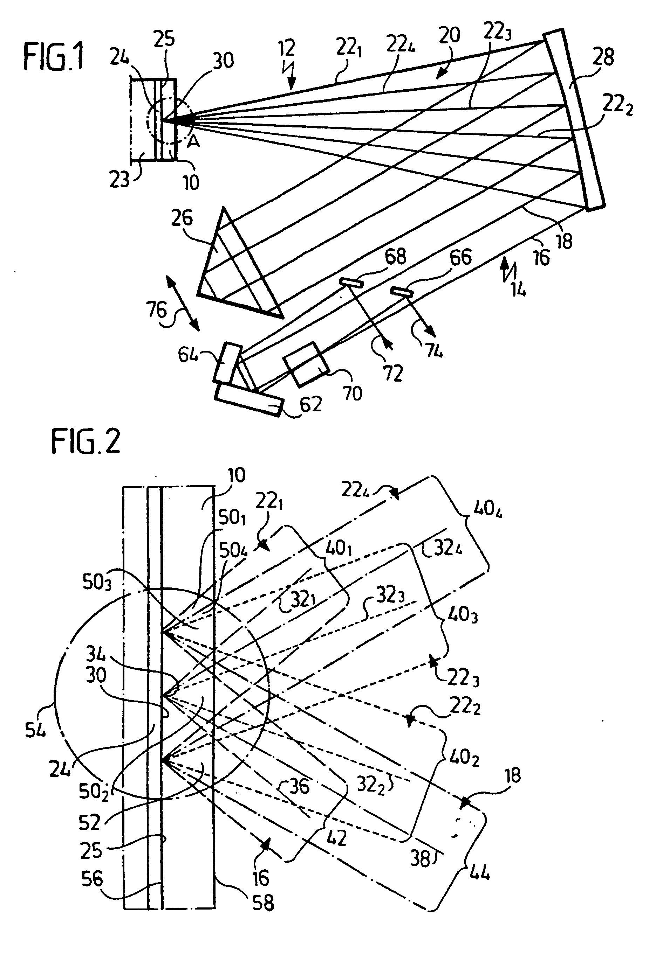

Ein erstes Ausführungsbeispiel eines erfindungsgemäßen Laserverstärkersystems, dargestellt in Fig. 1, umfaßt einen plättchenförmigen Festkörper 10, welcher ein laseraktives Medium aufweist, das durch eine zeichnerisch nicht dargestellte Pumplichtquelle optisch oder direkt elektrisch gepumpt wird und somit eine Besetzungsinversion für eine Laserverstärkung in dem gepumpten Volumenbereich aufweist.

Eine als Ganzes mit 12 bezeichnete Strahlungsfeldführungsoptik definiert ein insgesamt mit 14 bezeichnetes Strahlungsfeldsystem, welches einen einfallenden Ast 16, einen ausfallenden Ast 18 und ein zwischen dem einfallenden Ast 16 und dem ausfallenden Ast 18 vorgesehenes Verstärkerstrahlungsfeld 20 umfaßt, wobei das Verstärkerstrahlungsfeld 20 durch eine Vielzahl von beispielhaft dargestellten Zwischenästen 22₁ bis 22₄ gebildet ist, die im Anschluß an den einfallenden Ast 16 aufeinanderfolgen und an welche sich der ausfallende Ast 18 anschließt.

Zur Ausbildung der Zwischenäste 22₁ bis 22₄ umfaßt die Strahlungsfeldführungsoptik 12 ein erstes Strahlumkehrelement 24, vorzugsweise ausgebildet als durch eine Reflexionsfläche 25 rückreflektierender Reflektor, welcher einen auf diesen auftreffenden Zwischenast, beispielsweise den Zwischenast 22₂ in den nächstfolgenden Zwischenast, beispielsweise den Zwischenast 22₃ umsetzt, wobei aufeinanderfolgende Zwischenäste 22 einen Winkel von > 0° miteinander einschließen, und ein zweites Strahlumkehrelement 26, welches beispielsweise als Umlenker ausgebildet ist und jeden einfallenden Zwischenast 22, beispielsweise den Zwischenast 22₁ in einen sich in umgekehrter Richtung ausbreitenden räumlich getrennten Zwischenast 22 umlenkt.

Beispielsweise ist der Umlenker 26 dabei so ausgebildet, daß er jeden Zwischenast 22, beispielsweise den Zwischenast 22₁ in einen parallel versetzten Zwischenast, beispielsweise den Zwischenast 22₂, umsetzt. Vorzugsweise ist noch ein Übertragungselement 28 vorgesehen, welches gleichzeitig noch eine Faltung der Zwischenäste 22₁ bis 22₄ bewirkt und dabei noch die in Richtung des Umlenkers 26 parallel zueinander verlaufenden Zwischenäste 22₁ bis 22₄ in auf einem Flächenbereich 30 auf dem Reflektor 24 auftreffende Zwischenäste umsetzt.

Dabei verlaufen die Zwischenäste 22₁ bis 22₄ mit ihren Strahlachsen 32₁ bis 32₄ so, daß sich diese in einem im wesentlichen punktförmigen Schnittvolumen 34 mittig des Flächenbereichs 30 schneiden und dabei außerdem sich in dem punktförmigen Schnittvolumen 34 auch noch mit einer Strahlachse 36 des einfallenden Astes 16 und einer Strahlachse 38 des ausfallenden Astes 18 schneiden (Fig. 2).

Das punktförmige Schnittvolumen 34 hat dabei vorzugsweise eine maximale Ausdehnung in jeder Richtung, die kleiner ist als ein Zehntel der maximalen Ausdehnung des Flächenbereichs 30, noch besser kleiner als ein Hundertstel des Flächenbereichs 30.

Die Ausdehnung des Flächenbereichs 30 in jeder Richtung ist vorzugsweise durch einen Strahlungsfeldquerschnitt 40₁ bis 40₄ des jeweiligen Zwischenastes 22₁ bis 22₄ sowie einen Strahlungsfeldquerschnitt 42 des einfallenden Astes 16 und einen Strahlungsfeldquerschnitt 44 des ausfallenden Astes 18 bestimmt, wobei vorzugsweise die Strahlungsfeldführungsoptik 12 so ausgebildet ist, daß die Strahlungsfeldquerschnitte 40, 42 und 44 ungefähr gleich groß sind.

Da die Strahlachsen 32 der Zwischenäste 22 mit der Reflexionsfläche 25 des Reflektors 24 einen Winkel von weniger als 90° einschließen, ist der Flächenbereich 30 größer als die jeweiligen Strahlungsfeldquerschnitte 40 der Zwischenäste 22.

Jeder der Zwischenäste 22₁ bis 22₄ durchsetzt den Festkörper 10 mit einem Volumenabschnitt 50₁ bis 50₄, wobei sich die Volumenabschnitte 50₁ bis 50₄ vorzugsweise überlappen und die Summe aller Volumenabschnitte 50₁ bis 50₄ einen aktiven Volumenbereich 52 im Festkörper 10 festlegt, innerhalb von welchem aufgrund der Inversion eine Laserverstärkung erfolgt.

Um zu erreichen, daß sich die Volumenabschnitte 50₁ bis 50₄ in dem Festkörper 10 im wesentlichen überlappen, wird das punktförmige Schnittvolumen 34, in welchem sich die Strahlachsen 32, 36 und 38 schneiden so gelegt, daß er innerhalb eines Raumbereichs 54 liegt, welcher den aktiven Volumenbereich 52 miteinschließt und sich über Flachseiten 56 und 58 des Festkörpers hinaus maximal über eine dem Abstand der Flachseiten 56 und 58 entsprechende Distanz hinaus ausdehnt.

Ferner umfaßt die Strahlungsfeldführungsoptik 12 noch ein Abschlußelement 62 für den einfallenden Ast 16 und ein Abschlußelement 64 für den ausfallenden Ast 18, wobei den Abschlußelementen 62 und 64 noch beispielsweise Hilfsspiegel 66 und 68 zugeordnet sind, um Laserstrahlung in das Laserverstärkersystem in geeigneter Weise einzukoppeln und auszukoppeln.

Ferner ist, wie in Fig. 1 dargestellt, dem einfallenden Ast 16 noch ein Schaltelement 70 zugeordnet, welches beispielsweise zwischen einem Strahlung beugenden oder Strahlung nicht beeinflussenden Zustand hin- und herschaltbar ist.

Ein derartiges strahlungsbeugendes Element ist beispielsweise ein akustooptischer Modulator, wie er in der PCT-Anmeldung EP00/01802 beschrieben ist, auf welche hiermit vollinhaltlich Bezug genommen wird.

Mit einem derartigen aktustooptischen Modulator als Schaltelement 70 besteht die Möglichkeit, einen in Form eines einfallenden Strahlungsfeldes 72 durch die Abschlußelemente 64 und 62 im spitzen Winkel zum einfallenden Ast 16 einfallenden Laserpuls durch Beugung mittels des akustooptischen Modulators 70 in den einfallenden Ast 16 einzukoppeln, so daß dieser dann über den einfallenden Ast 16, gefaltet durch das Übertragungselement 28, auf den Reflektor 24 trifft und von diesem, wie in Fig. 2 dargestellt, in den ersten Zwischenast 22₁ durch Reflexion im Flächenbereich 30 umgesetzt wird.

Der Zwischenast 22₁ breitet sich nun, ausgehend vom Reflektor 24, über das Übertragungselement 28 zum Umlenker 26 aus und wird dort in einen parallel versetzten Zwischenast 22₂ umgesetzt, der von dem Übertragungselement 28 wiederum in den Flächenbereich 30 reflektiert wird und dort vom Reflektor 24 durch Reflexion in den Zwischenast 22₃ umgesetzt wird, welcher wiederum über das Übertragungselement 28 zum Umlenker 26 verläuft, von diesem in den Zwischenast 22₄ umgesetzt wird, der seinerseits wiederum über das Übertragungselement 28 zum Flächenbereich 30 verläuft und in diesem vom Reflektor 24 durch Reflexion in den ausfallenden Ast 18 umgesetzt wird.

Die Abschlußelemente 62 und 64 sind so relativ zueinander angeordnet, daß sie den ausfallenden Ast 18 in den einfallenden Ast 16 auf ihren dem Verstärkerstrahlungsfeld gegenüberliegenden Seite umsetzen, so daß nach einmaligem Durchlaufen des Laserpulses durch das Strahlungsfeldsystem 14 der Laserpuls erneut durch das Strahlungsfeld 14 hindurchläuft und zwar so lange, bis eine Ansteuerung des Schaltelements 70 erfolgt, welche den über den ausfallenden Ast 18 in den einfallenden Ast 16 eintretenden Laserpuls durch Beugung im spitzen Winkel zum einfallenden Ast 16 und Reflexion am Hilfsspiegel 66 als austretendes Strahlungsfeld 74 austreten läßt.

Damit besteht die Möglichkeit, einen über das einfallende Strahlungsfeld 72 eintretenden Laserpuls in dem erfindungsgemäßen Strahlungsfeldsystem 14 so lange zu verstärken, bis eine ausreichend große Energie zur Verfügung steht und dann über das Schaltelement 70 aus dem Strahlungsfeldsystem 14 auszukoppeln.

Darüber hinaus bildet das erste Ausführungsbeispiel des erfindungsgemäßen Laserpulsverstärkersystems die Möglichkeit, die Zahl der Zwischenäste 22 variabel einzustellen.

Wird beispielsweise der Umlenker 26 in Richtung 76 quer zu den Strahlachsen der auf diesen auftretenden Äste so verschoben, daß dieser den ersten Zwischenast 22₁ in den vierten Zwischenast 22₄ umsetzt und somit die Zwischenäste 22₂ und 22₃ entfallen, ist die Zeit, die ein Laserpuls benötigt, um im Strahlungsfeldsystem 14 vom einfallenden Ast 16 in den ausfallenden Ast 18 zu gelangen, kürzer und außerdem ist die Verstärkung geringer, da die Verstärkung die im zweiten und dritten Zwischenast 22₂ und 22₃ erfolgt, wegfällt.

Der Festkörper 10 wird vorzugsweise durch eine Wärmesenke 23 gekühlt, welche auf einer dem Reflektor 24 gegenüberliegenden Seite angeordnet ist, so daß die Wärme aus dem Festkörper 10 flächig durch den Reflektor 24 hindurch über die Wärmesenke 23 abgeleitet wird.

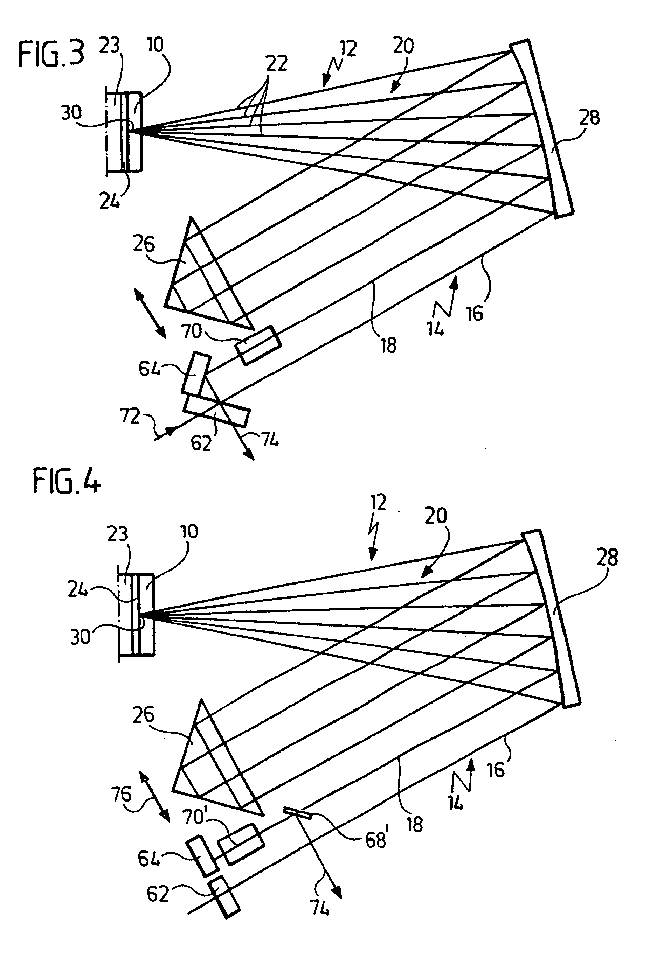

Bei einem zweiten Ausführungsbeispiel eines erfindungsgemäßen Laserverstärkersystems, dargestellt in Fig. 3, sind diejenigen Elemente, die mit denen des ersten Ausführungsbeispiels identisch sind, mit denselben Bezugszeichen versehen, so daß hinsichtlich der Beschreibung derselben vollinhaltlich auf das erste Ausführungsbeispiel Bezug genommen werden kann.

Die Abschlußelemente 62 und 64 des einfallenden Astes 16 und des ausfallenden Astes 18 sind in gleicher Weise wie beim ersten Ausführungsbeispiel angeordnet, allerdings ist das Abschlußelement 62 ein polarisationsabhängig reflektierender Spiegel. Aus diesem Grund ist das Schaltelement 70' in dem ausfallenden Ast 18 angeordnet, so daß die Möglichkeit besteht, durch geeignete Polarisationsbeeinflussung entweder am Abschlußelement 62 den ausfallenden Ast 18 in den einfallenden Ast 16 umzusetzen und somit das gesamte Strahlungsfeldsystem 14 erneut zu durchlaufen oder die Polarisation so zu beeinflussen, daß der ausfallende Ast 18 nach Reflexion am Abschtußelement 64 den polarisationsabhängig durchlässigen Spiegel 62 aufgrund der geeigneten Polarisationsrichtung durchsetzt und somit als ausfallendes Strahlungsfeld 74 austritt.

In gleicher Weise ist durch geeignete Polarisation das einfallende Strahlungsfeld 72 durch das Abschlußelement 62 hindurch einkoppelbar.

Bei einem dritten Ausführungsbeispiel eines erfindungsgemäßen Laserverstärkersystems sind diejenigen Elemente, die mit denen der voranstehend beschriebenen Ausführungsbeispiele identisch sind, ebenfalls mit denselben Bezugszeichen versehen, so daß hinsichtlich der Beschreibung vollinhaltlich auf die Ausführungen zum ersten und zweiten Ausführungsbeispiel Bezug genommen werden-kann.

Im Gegensatz zum ersten und zweiten Ausführungsbeispiel sind die Abschlußelemente 62 und 64 als rückreflektierende Spiegelelemente ausgebildet, so daß ohne Einwirkung durch das Schaltelement 70' ein das Strahlungsfeldsystem 14 durchlaufener Laserpuls am Abschlußelement 64 in sich zurückreflektiert wird oder durch Polarisationsbeeinflussung mittels des Schaltelementes 70' und eines teildurchlässigen und polarisationsabhängig reflektierenden Hilfsspiegels 68' ausgekoppelt wird.

In gleicher Weise ist es denkbar, das Schaltelement 70' und den teildurchlässigen polarisationsabhängigen Hilfsspiegel 68' im einfallenden Ast 16 anzuordnen, so daß stets der Laserpuls bei Erreichen des ausfallenden Astes 18 am Abschlußelement 68 in sich zurückreflektiert wird und das gesamte Strahlungsfeldsystem 14 erneut bis zum einfallenden Ast in umgekehrter Richtung durchläuft und erst durch das Schaltelement im einfallenden Ast 14 ausgekoppelt werden kann.

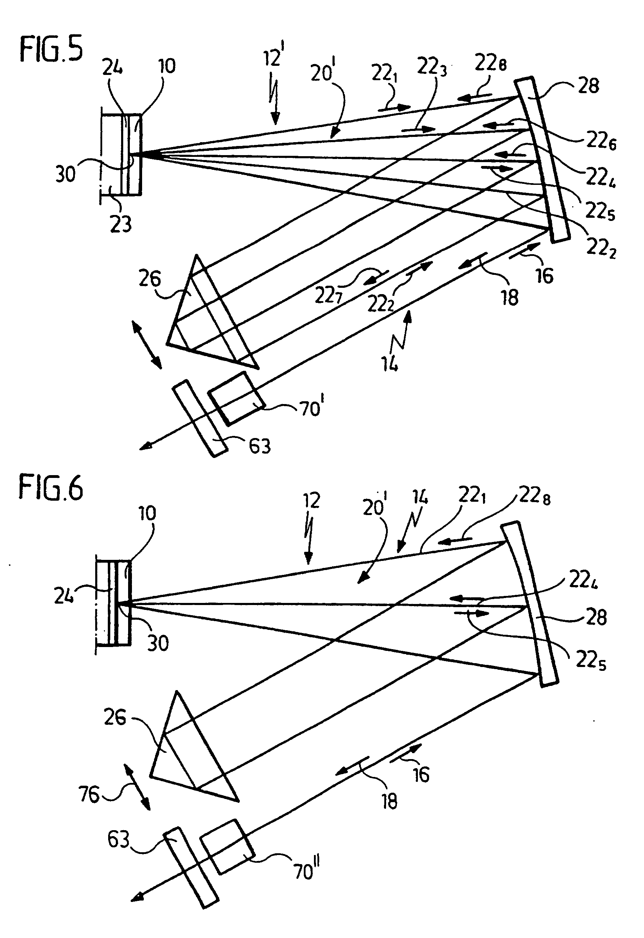

Bei einem vierten Ausführungsbeispiel, dargestellt in Fig. 5, ist die Strahlungsfeldführungsoptik 12' insoweit modifiziert, als der einfallende Ast 16 und der ausfallende Ast 18 geometrisch zusammenfallen und außerdem das Verstärkerstrahlungsfeld 20 jeweils zwei geometrisch zusammenfallende Zwischenäste aufweist.

Wie im einzelnen in Fig. 5 dargestellt, wird der einfallende Ast 16 im Flächenbereich 30 durch Reflexion am Reflektor 24 in den ersten Zwischenast 22₁ umgesetzt, der über das Übertragungselement zum Umlenker 26 verläuft und vom Umlenker 26 in den zweiten Zwischenast 22₂ umgesetzt wird, welcher wiederum im Flächenbereich 30 durch den Reflektor 24 in den dritten Zwischenast 22₃ umgesetzt wird, der vom Übertragungselement 28 und vom Umlenker 26 in den vierten Zwischenast 22₄ umgesetzt wird.

Der vierte Zwischenast 22₄ trifft nun so auf den Flächenbereich 30 des Reflektors 24, daß er in einen geometrisch mit dem vierten Zwischenast 22₄ deckungsgleich, allerdings in umgekehrter Richtung verlaufenden fünften Zwischenast 22₅ umgesetzt wird, der wiederum über das Übertragungselement 28 und zum Umlenker 26 verläuft und von diesen in den sechsten Zwischenast 22₆ umgesetzt wird, der geometrisch deckungsgleich mit dem dritten Zwischenast 22₃, jedoch mit umgekehrter Ausbreitungsrichtung verläuft und somit von dem Flächenbereich 30 des Reflektors 24 in den siebten Zwischenast 22₇ umgesetzt wird, der seinerseits wiederum deckungsgleich mit dem zweiten Zwischenast 22₂, jedoch wiederum in umgekehrter Ausbreitungsrichtung verläuft und über das Übertragungselement 28 so auf den Umlenker 26 trifft, daß dieser den siebten Zwischenast 22₇ in einen achten Zwischenast 22₈ umsetzt, der geometrisch deckungsgleich mit dem ersten Zwischenast 22₁, jedoch in umgekehrter Ausbreitungsrichtung verläuft und vom Flächenbereich 30 des Reflektors 24 wiederum in einen deckungsgleich, jedoch in umgekehrter Richtung wie der einfallende Ast 16 verlaufenden ausfallenden Ast 18 umgesetzt wird, der dann auf ein einziges Abschlußelement 63 trifft.

Zusätzlich ist noch das Schaltelement 70" vorgesehen, welches dazu vorgesehen ist optische Verluste im Strahlungsfeldsystem 14 zu erzeugen, durch welche das Erreichen der Laserschwelle aktiv steuerbar ist. Ferner ist das Abschlußelement 63 teildurchlässig und sogt dafür, daß durch Reflexion am Abschlußelement 63 ein Teil der Laserstrahlung beispielsweise eines Laserpulses ausgekoppelt und der andere Teil reflektiert wird.

Auch beim vierten Ausführungsbeispiel besteht, wie in Fig. 6 dargestellt, die Möglichkeit, durch Verschieben des Umlenkers 26 in Richtung 76 die Zahl der Zwischenäste 22 variabel einzustellen.

Wird beispielsweise der Umlenker 26 so verschoben, daß der erste Zwischenast 22₁ unmittelbar in den vierten Zwischenast 22₄ umgesetzt wird, so erfolgt nach Bildung des Zwischenastes 22₅ unmittelbar ein Umsetzen desselben wieder mittels des Umlenkers 26 in den Zwischenast 22₈, aus dem dann der ausfallende Ast 18 entsteht, so daß die Zwischenäste 22₂ und 22₃ sowie 22₆ und 22₇ entfallen.

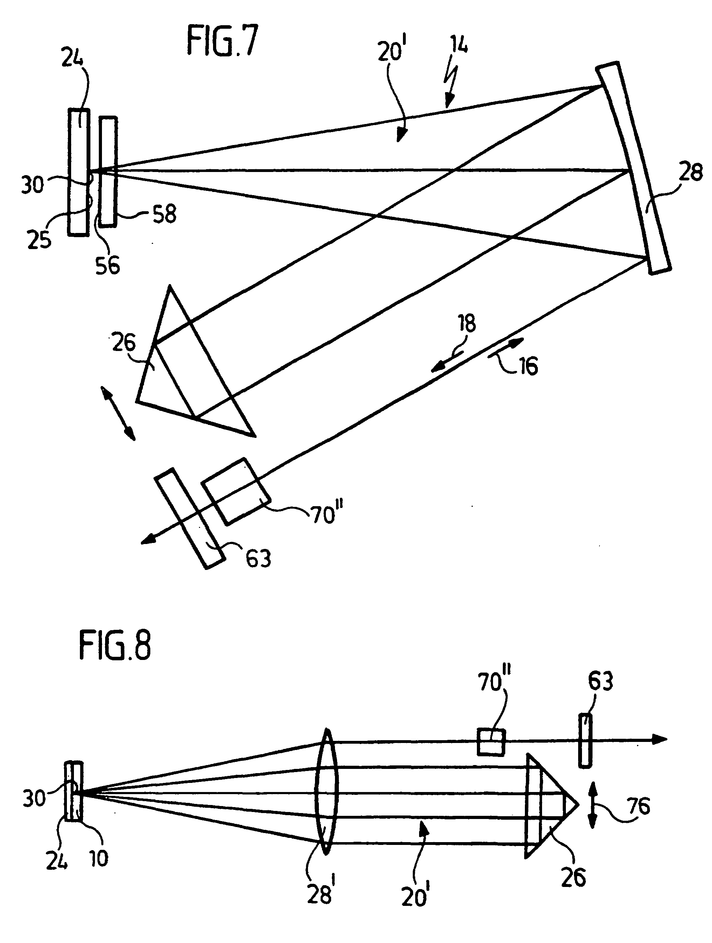

Bei einem fünften Ausführungsbeispiel eines erfindungsgemäßen Laserverstärkersystems, dargestellt in Fig. 7, sitzt im Gegensatz zu den voranstehend beschriebenen Ausführungsbeispielen der Festkörper 10 nicht unmittelbar mit seiner Flachseite 56 auf der Reflexionsfläche 25 des Reflektors 24, sondern die Flachseite 56 ist im Abstand von der Reflexionsfläche 25 angeordnet, jedoch nach wie vor so, daß das Schnittvolumen 34 innerhalb des Raumbereichs 54, erläutert im Zusammenhang mit dem ersten Ausführungsbeispiel, liegt.

Bei einem sechsten Ausführungsbeispiel, dargestellt in Fig. 8, wird dasselbe Prinzip eingesetzt, wie beim vierten und fünften Ausführungsbeispiel, allerdings ist im Gegensatz zu allen voranstehenden Ausführungsbeispielen das Übertragungselement 28' nicht als Reflektor ausgebildet, sondern als Linsensystem, so daß der Umlenker 26 und der Reflektor 24 einander gegenüberliegend angeordnet sind.

Im übrigen arbeitet das sechste Ausführungsbeispiel in gleicher Weise wie das vierte Ausführungsbeispiel, so daß hinsichtlich der Funktion desselben vollinhaltlich auf die Ausführungen zum vierten Ausführungsbeispiel Bezug genommen werden kann.

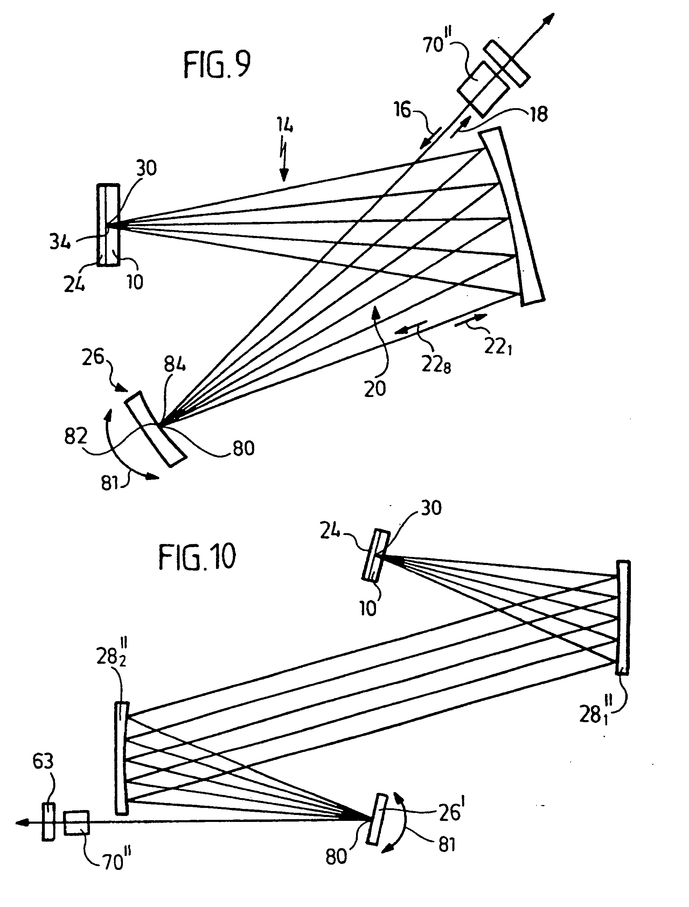

Ein siebtes Ausführungsbeispiel, dargestellt in Fig. 9 arbeitet vom Grundsatz her nach demselben Prinzip wie das vierte bis sechste Ausführungsbeispiel, das heißt, daß das Verstärkerstrahlungsfeld 20 geometrisch zusammenfallende, sich jedoch in unterschiedlichen Richtungen ausbreitende Zwischenäste 22 aufweist.

Im Gegensatz zu allen voranstehenden Ausführungsbeispielen ist allerdings der Umlenker 26 als reflektierender Spiegel ausgebildet und weist einen Flächenbereich 80 auf, in welchem die Zwischenäste analog zu den Verhältnissen im Flächenbereich 30 auftreffen und reflektiert werden, wobei sich vorzugsweise alle Strahlachsen 32 in einem punktförmigen Schnittvolumen 84 analog zum punktförmigen Schnittvolumen 34 schneiden.

In Anpassung an diesen geänderten Umlenker 26 ist auch das Übertragungselement 28" so ausgebildet, daß sich die Zwischenäste 22₁ bis 22₈ jeweils zwischen den Flächenbereichen 30 und 80 erstrecken und in diesen Flächenbereichen 30 und 80 mit ihren Strahlungsfeldquerschnitten 40 überlappend verlaufen.

Ferner ist beim siebten Ausführungsbeispiel die Zahl der Zwischenäste 22 durch Verdrehen des Umlenkers 26 gemäß dem Richtungspfeil 81 wählbar, wobei eine Drehachse 82 das Schnittvolumen 84 schneidet.

Bei einem achten Ausführungsbeispiel, dargestellt in Fig. 10, findet dasselbe Prinzip wie beim siebten Ausführungsbeispiel Verwendung, allerdings mit dem Unterschied, daß das Übertragungselement 28" aus zwei Reflektoren, nämlich 28"₁ und 28"₂ gebildet ist, die jeweils für eine Überlappung der Strahlungsfeldquerschnitte 40 der einzelnen Zwischenäste 22₁ bis 22₈ in den Flächenbereichen 30 und 80 sorgen, während die Zwischenäste 22 zwischen den Reflektoren 28"₁ und 28"₂ parallel zueinander verlaufen, wobei die Möglichkeit besteht, ein Raumfilter, wie beispielsweise im US-Patent 4,156,852 beschrieben, einzusetzen.

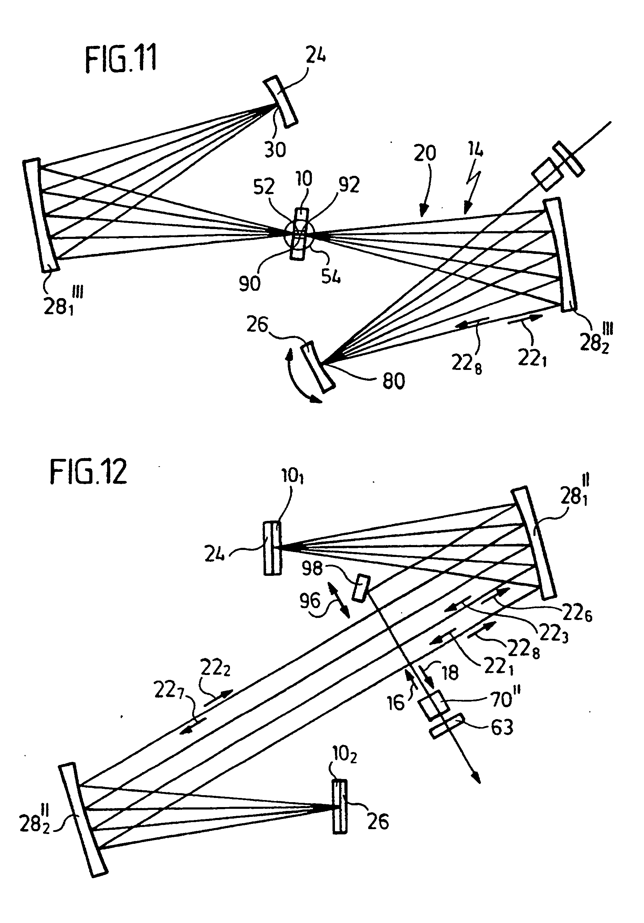

Bei einem neunten Ausführungsbeispiel, dargestellt in Fig. 11, ist das Verstärkerstrahlungsfeld 20 derart geformt, daß sich die Zwischenäste 22₁ bis 22₈ mit ihren Strahlungsfeldquerschnitten 40 nicht nur in den Flächenbereichen 30 und 80 des Reflektors 24 bzw. des Umlenkers 26 überlappen, sondern auch noch in einem Zwischenfokus 90, welcher zwischen den Übertragungselementen 28"'₁ und 28"'₂ gebildet ist.

Außerdem sitzt der Festkörper 10 nicht vor dem Reflektor 24, sondern ist so angeordnet, daß er von den sich zwischen den Übertragungselementen 28"'₁ und 28"'₂ erstreckenden Abschnitten der Zwischenäste 22 durchstrahlt wird.

In dem Zwischenfokus 90 schneiden sich vorzugsweise die Strahlungsfeldachsen 32 aller Zwischenäste 22 innerhalb eines Schnittvolumens 92, welches innerhalb des den aktiven Volumenbereich 52 umfassenden Raumbereichs 54 liegt, um wie im Zusammenhang mit dem punktförmigen Bereich 34 bei den voranstehenden Ausführungsbeispielen erläutert, eine möglichst weitgehende Überlappung der Volumenabschnitte 50₁ und 50₈ der Zwischenäste 22₁ bis 22₈ innerhalb des aktiven Volumenbereichs 52 des Festkörpers 10 zu erhalten.

Bei einem zehnten Ausführungsbeispiel, dargestellt in Fig. 12 sind diejenigen Elemente, die mit denen der voranstehenden Ausführungsbeispiele identisch sind, mit denselben Bezugszeichen versehen, wobei das zehnte Ausführungsbeispiel auf dem Prinzip des achten Ausführungsbeispiels, dargestellt in Fig. 10 basiert.

Im Gegensatz zum achten Ausführungsbeispiel ist bei dem zehnten Ausführungsbeispiel auch vor dem Umlenker 26, der als Reflektor ausgebildet ist, ein Festkörper 10₂ aus laseraktivem Material, das aufgrund von Pumpen eine Inversion aufweist, vorgesehen, so daß jeder der Zwischenäste 22₁ bis 22₈ zweimal einen aktiven Volumenbereich 52 im entsprechenden Festkörper 10₁ und 10₂ durchläuft und somit eine zweifache Verstärkung erfährt.

Ferner ist zum Einstellen der Zahl der Zwischenäste 22 ein in einer Richtung 96 quer zu den sich zwischen den Übertragungselementen 28"₁ und 28"₂ erstreckenden Abschnitten der Zwischenäste 22 verfahrbarer Umlenkspiegel 98 vorgesehen, mit welchem die Möglichkeit besteht, den einfallenden Ast 16 und den ausfallenden Ast so zu legen, daß diese entweder in den ersten Zwischenast 22₁ bzw. 22₈ oder den dritten Zwischenast 22₃ bzw. 22₆ umgesetzt werden.

Im übrigen ist das zehnte Ausführungsbeispiel in gleicher Weise ausgebildet wie die voranstehenden Ausführungsbeispiele, so daß hinsichtlich der übrigen, nicht beschriebenen Elemente vollinhaltlich auf die voranstehenden Ausführungsbeispiele Bezug genommen wird.

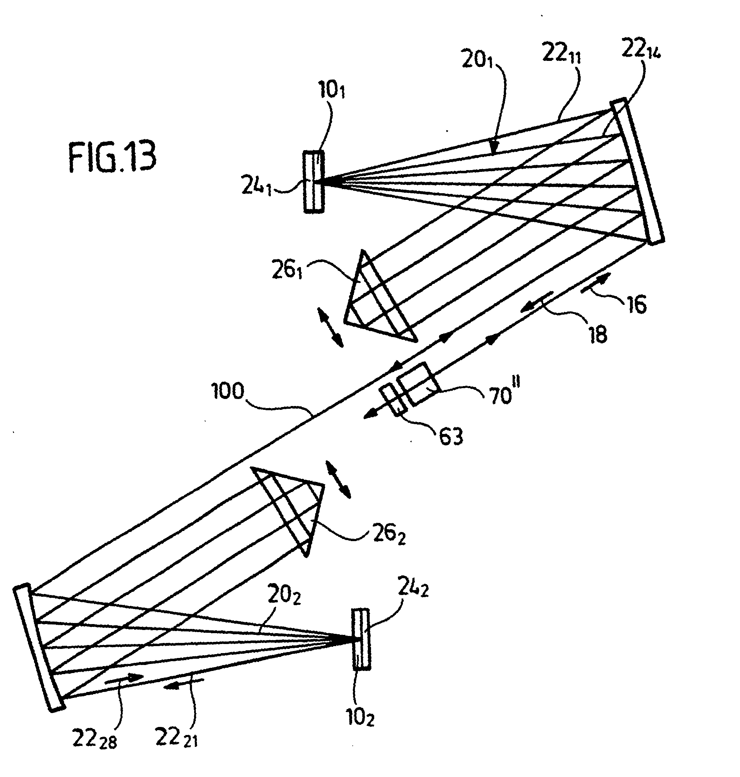

Bei einem elften Ausführungsbeispiel, dargestellt in Fig. 13, umfaßt das Strahlungsfeldsystem 14 zwei Verstärkerstrahlungsfelder 20₁ und 20₂ welche durch einen Verbindungsast 100 miteinander gekoppelt sind.

Ein über den einfallenden Ast 16 in das Verstärkerstrahlungsfeld 20₁ eintretender Laserpuls wird somit zunächst im Verstärkerstrahlungsfeld 20₁ durch die sich zwischen dem Reflektor 24₁ und dem Umlenker 26₁ erstreckenden Zwischenäste 22₁₁ bis 22₁₄ verstärkt, dann wird der Zwischenast 22'₄ über den Verbindungsast 100 mit dem Zwischenast 22₂₁ des Verstärkerstrahlungsfeld 20₂ gekoppelt und durch die Zwischenäste 22₂₁ bis 22₂₈, die sich zwischen dem Reflektor 24₂ und dem Umlenker 26₂ erstrecken im Festkörper 10₂ verstärkt, so lange, bis der Zwischenast 22₂₈ wieder in den Verbindungsast 100 umgesetzt wird, der wiederum dazu führt, daß der Laserpuls das Verstärkerstrahlungsfeld 20₁ in umgekehrter Richtung durchläuft.

Das Verstärkerstrahlungsfeld 20₂ ist dabei in gleicher Weise ausgebildet wie das Verstärkerstrahlungsfeld 20' des vierten Ausführungsbeispiels, dargestellt in Fig. 5.

Insgesamt durchläuft somit die Laserstrahlung, beispielsweise in Form eines Laserpulses, welcher über den einfallenden Ast 16 eingekoppelt wird, zunächst die Zwischenäste 22₁₂ bis 22₁₄ des Verstärkerstrahlungsfeldes 20₁, dann die Zwischenäste 22₂₁ bis 22₂₈ des zweiten Verstärkerstrahlungsfeldes 20₂, dann wieder die Zwischenäste 22₁₄ bis 22₁₁ des ersten Verstärkerstrahlungsfeldes 20₁ und erreicht dann den ausfallenden Ast 18.

Bei einem weiteren bevorzugten Ausführungsbeispiel eines erfindungsgemäßen Laserverstärkersystems ist, das Strahlungsfeldsystem 14 so aufgebaut, daß die Phasenkrümmung der Zwischenäste 22 in den den aktiven Volumenbereich 52 durchsetzenden Volumenabschnitten 50 der Zwischenäste 22 mit gleicher Strahlausbreitungsrichtung im wesentlichen identisch ist. Dadurch wird erreicht, daß die Phasenkrümmung und die Strahldurchmesser im einfallenden und ausfallenden Ast weitgehend unabhängig von der Anzahl der Zwischenäste 22 sind.

Ferner ist bei diesem Ausführungsbeispiel, das Strahlungsfeldsystem 14 außerdem so ausgebildet, daß innerhalb des aktiven Volumenbereichs 52 die Strahlungsfeldquerschnitte 40 der Zwischenäste 22 mit jeweils gleicher Ausbreitungsrichtung dieselbe Symmetrie und auch dieselbe Symmetrieausrichtung aufweisen, so daß die mit ungefähr gleicher Ausbreitungsrichtung den aktiven Volumenbereich 52 durchsetzenden Zwischenäste 22 in derselben Weise mit dem laseraktiven Material im Festkörper 10 koppeln.

Diese Verhältnisse lassen sich beispielsweise bei dem Ausführungsbeispiel gemäß Fig. 10 erreichen.

Darüber hinaus ist, bei einer weiteren vorteilhaften Ausführungsform das Strahlungsfeldsystem 14 so ausgebildet, daß sich in dem aktiven Volumenbereich 52 durch jeden diesen in derselben Strahlrichtung durchsetzenden Zwischenast 22 die Strahlungsverhältnisse eines afokalen Systems einstellen, bei welchem Strahlanteile gleichen Winkels im aktiven Volumen stets dieselben Winkel relativ zueinander aufweisen.

Eine derartige Bedingung läßt sich beispielsweise bei dem Ausführungsbeispiel gemäß Fig. 10 erreichen.

Das erfindungsgemäße Laserverstärkersystem läßt sich vorzugsweise in folgenden Betriebsmodi betreiben.

So ist es grundsätzlich denkbar, das erfindungsgemäße Laserverstärkersystem im kontinuierlichen Betrieb zu betreiben, wobei dann das Schaltelement 70, beispielsweise arbeitend als akustooptischer Modulator gemäß dem Ausführungsbeispiel der Fig. 1, für eine konstante Auskopplung der Laserleistung sorgt.

Besonders vorteilhaft läßt sich jedoch das erfindungsgemäße Laserverstärkersystem im Pulsbetrieb betreiben, wobei im Pulsbetrieb der große Vorteil darin besteht, daß ein Laserpuls auf seinem Weg durch das Strahlungsfeldsystem 14 vom einfallenden Ast 16 zum ausfallenden Ast 18 eine große Laufzeit, bedingt durch die große Zahl der möglichen Zwischenäste 22 des Verstärkerstrahlungsfeldes 20 aufweist, wobei innerhalb des Verstärkerstrahlungsfeldes 20 mindestens jeder Zwischenast 22 einmal das laseraktive Medium 10 durchsetzt und somit der Laserpuls beim Durchlaufen jedes Zwischenastes 22 mindestens einmal eine Verstärkung im laseraktiven Medium 10 erfährt.

Damit kann insbesondere bei laseraktiven Medien in Form dünner Festkörperplättchen 10 die Zahl der Durchläufe durch das laseraktive Medium sehr hoch gehalten werden, so daß eine hohe Verstärkung erreichbar ist, ohne daß diese von den Verlusten durch das Schaltelement 70 beeinträchtigt wird, da die Verluste im Schaltelement 70 lediglich dann auftreten, wenn der Laserpuls entweder den einfallenden Ast 16 oder den ausfallenden Ast 18 erreicht, in denen vorzugsweise das Schaltelement 70 angeordnet ist.

Es ist bei allen voranstehend beschriebenen Ausführungsbeispielen ein Pulsbetrieb entweder mit dem Schaltelement 70 oder dem Schaltelement 70' oder dem Schaltelement 70" mit entsprechend zugeordneten optischen Komponenten möglich.

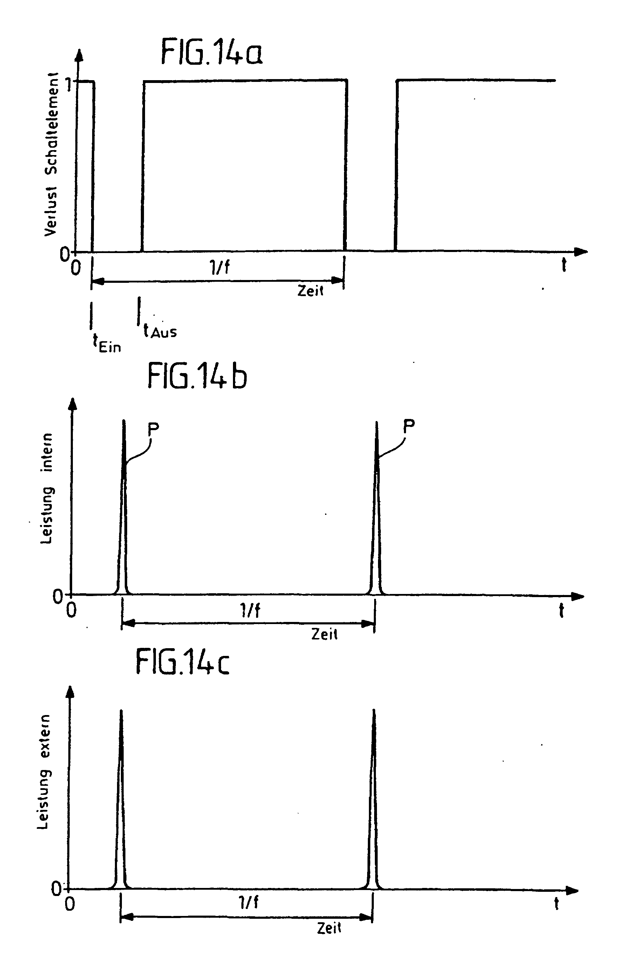

Eine erste Betriebsweise des gepulsten Lasersystems ist in Fig. 14 dargestellt.

Bei dieser Betriebsweise, der sogenannten Güteschaltung oder auch Q-Switch wird - wie in Fig. 14a dargestellt - zunächst das Verluste im Strahlungsfeldsystem 14 beeinflussende Schaltelement 70" so geschaltet, daß die Verluste im Strahlungsfeldsystem 14 so hoch sind, daß die Laserschwelle nicht erreicht wird. In diesem Zustand wird im ständig optisch gepumpten laseraktiven Medium Energie gespeichert.

Wird nun das Schaltelement 70 zum Zeitpunkt tₑᵢₙ auf möglichst niedrige Verluste geschaltet, so baut sich in dem Strahlungsfeldsystem 14 ein Laserpuls P entweder durch spontane Emission oder durch einen eingekoppelten Puls auf, wobei bei diesem Aufbau des Laserpulses P dem laseraktiven Medium, das heißt dem Festkörper 10, so viel Energie entzogen wird, daß aufgrund des Abfalls der Inversionsdichte beim Aufbau des Laserpulses P die Laserschwelle unterschritten wird und somit für eine bestimmte Zeit keine Laserverstärkung mehr erfolgt (Fig. 14b).

Der Laserpuls P wird nun teilweise durch einen teildurchlässigen Spiegel, wie ihn beispielsweise das Abschlußelement 63 darstellt, ausgekoppelt (Fig. 14c).

Um nun wiederum die Möglichkeit zu haben, eine hohe Inversionsdichte aufzubauen, werden nach Aufbau des Laserpulses P und Austreten desselben durch das Schaltelement 70" zum Zeitpunkt tₐᵤₛ die Verluste wiederum so lange auf einem hohen Wert gehalten, bis sich eine hohe Inversionsdichte im laseraktiven Medium 10 aufgebaut hat.

Da bei der Güteschaltung die Pulsaufbauzeit und die Pulsdauer mit der Umlaufzeit des Laserpulses P von dem einfallenden Ast 16 zum ausfallenden Ast 18 zunehmen, werden die Zeiträume von tₑᵢₙ bis tₐᵤₛ groß, so daß als Schaltelement 70" vorteilhafterweise langsam arbeitende Schaltelemente, beispielsweise im im Mikrosekundenbereich arbeitende Schaltelemente 70", eingesetzt werden können.

Bei den Schaltelementen 70 und 70' ist durch die aktive Auskopplung die Zahl der Durchläufe und damit auch die Pulsdauer wählbar.

Hinsichtlich der grundlegenden Durchführung des Pulsbetriebs mit Güteschaltung wird auf das Buch "Lasers", Anthony E. Siegman, University Science Books, 1986, ISBN 0-935702-11-5 oder das Buch "Solid-State Laser Engineering", Walter Koechner, Springer-Verlag, 1999, ISBN 3-540-65064-4 verwiesen.

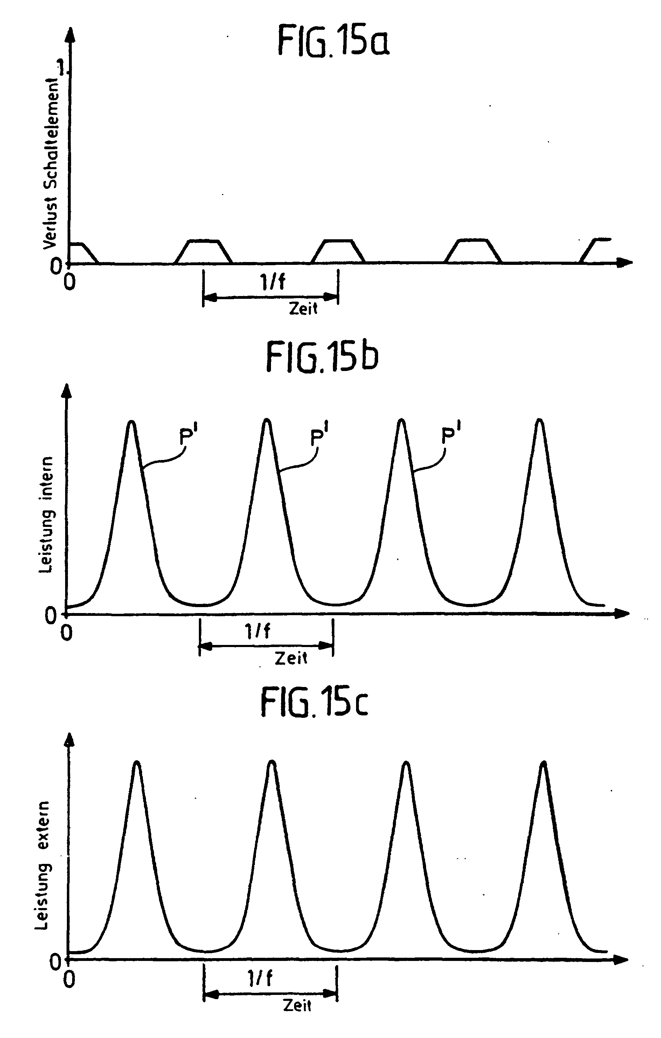

Bei einer zweiten Betriebsweise, dargestellt in Fig. 15 wird ein Pulsbetrieb durch verstärkte Relaxationsschwingungen erzeugt. Derartige verstärkte Relaxationsschwingungen lassen sich durch kleine periodische Störungen des Laserverstärkersystems, ausgelöst durch das Schaltelement 70", erreichen, wenn die Frequenz der Störung etwa der Resonanzfrequenz der Relaxationsschwingung entspricht. Voraussetzung für den Pulsbetrieb durch verstärkte Relaxationsschwingungen ist, daß die Laserschwelle nicht unterschritten wird und somit der Laser nicht jeweils neu aus dem Rauschen starten muß.

Aus diesem Grund werden, wie in Fig. 15a dargestellt, die Verluste im Strahlungsfeldsystem 14 nur durch eine geringe Modulationstiefe moduliert, so daß, wie in Fig. 15b dargestellt, sich im Strahlungsfeldsystem 14 periodische Laserpulse P ausbilden.

Der zeitliche Abstand zwischen den einzelnen Laserpulsen P' ist dabei abhängig von der Umlaufzeit, die bei dem erfindungsgemäßen Laserverstärkersystem sehr groß gewählt werden kann, um möglichst große Zeitabstände zwischen den Laserpulsen P' zu erreichen und andererseits mit Schaltelementen 70" mit niederer Frequenz arbeiten zu können.

Die Auskopplung erfolgt in diesem Fall durch das teildurchlässige Abschlußelement 63.

Hinsichtlich der allgemeinen Beschreibung der Betriebsweise mit verstärkten Relaxationsschwingungen wird auf das oben bereits zitierte Buch von "Siegmann" verwiesen.

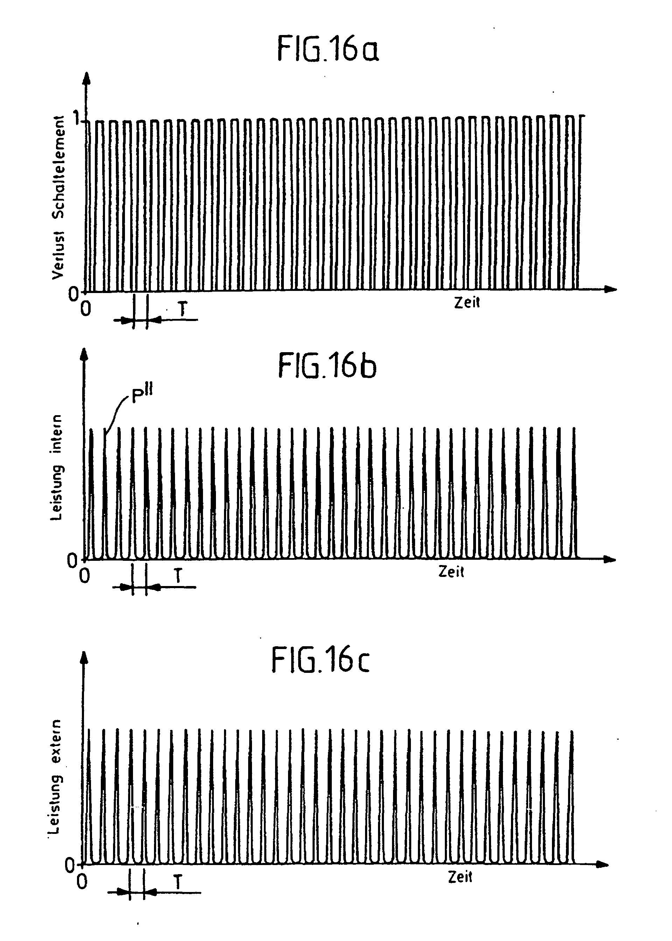

Bei einer dritten Betriebsweise der sogenannten aktiven Modenkopplung, dargestellt in Fig. 16, werden durch das Schaltelement 70 oder 70' oder 70" die Verluste im Strahlungsfeldsystem mit der Umlaufzeit eines Laserpulses P" vom einfallenden Ast 16 zum ausfallenden Ast 18 moduliert (Fig. 16a), wobei die Umlaufzeit mit T bezeichnet wird. Die Modulation der Verluste mit 1/T führt dazu, daß sich im Strahlungsfeldsystem 14 ein einziger Laserpuls P" ausbildet (Fig. 16a), der in diesem umläuft und genau dann das Schaltelement 70 durchläuft, wenn dieses minimale Verluste aufweist.

Die erfindungsgemäßen Laserverstärkersysteme bieten aufgrund der Verstellbarkeit der Umlaufzeiten eine Möglichkeit, die Schaltfrequenz einzustellen und andererseits ist grundsätzlich aufgrund der großen Umlaufzeiten die Möglichkeit gegeben, langsam arbeitende Schaltelemente 70 einzusetzen.

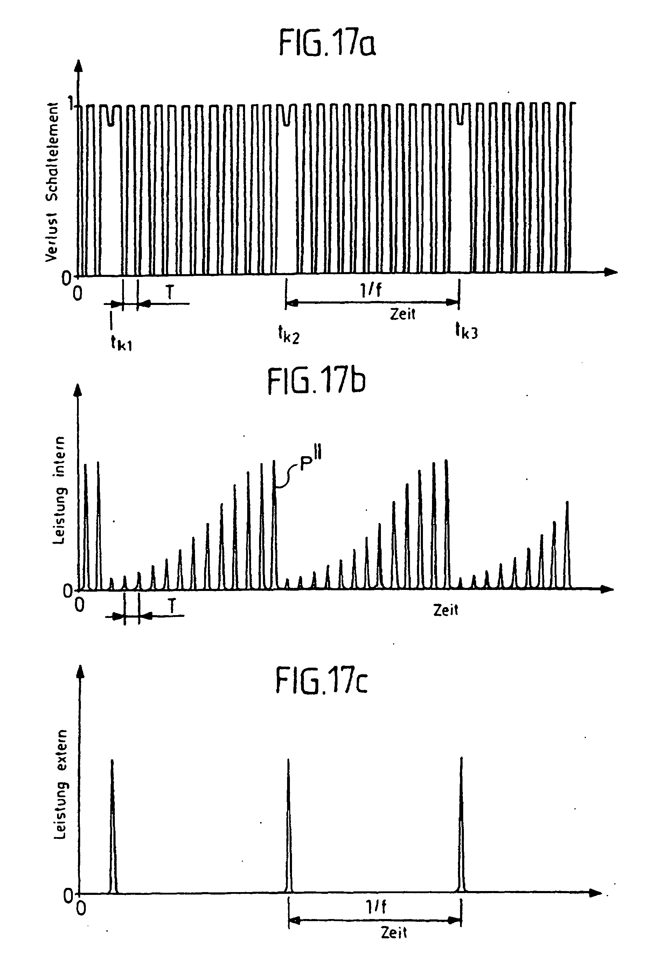

Bei einer vierten Betriebsweise, dargestellt in Fig. 17 wird die Betriebsweise der Modenkopplung mit der Betriebsweise des "Cavity Dumping" kombiniert.

Grundsätzlich werden dabei die Verluste im Strahlungsfeldsystem 14 moduliert (Fig. 17a), so daß, wie in Fig. 17b dargestellt, ein einziger Puls P" umläuft.

Ein derartiger einziger umlaufender Puls P" wird nun nicht jeweils beim Erreichen des ausfallenden Astes 18 oder des einfallenden Astes 16 ausgekoppelt, wie dies bei der dritten Betriebsweise der Fall wäre, sondern der eine sich ausbildende Laserpuls P" läuft mehrfach in dem Strahlungsfeldsystem 14 um, wobei sich die Pulsenergie ständig vergrößert. Bei Erreichen der maximalen Pulsenergie wird nun zum Zeitpunkt tₖ das Schaltelement 70 so geschaltet, daß es den ankommenden Laserpuls P" durch Strahlbeugung, wie beim ersten Ausführungsbeispiel, oder durch Polarisationsdrehung, wie beim zweiten Ausführungsbeispiel größtenteils auskoppelt (Fig. 17c), so daß nur ein verbleibender in seiner Energie deutlich reduzierter Laserpuls im Strahlungsfeldsystem 14 erneut umläuft und sich die in diesem enthaltene Energie wiederum ständig aufbaut, so lange, bis wieder eine Auskopplung zu einem Zeitpunkt tₖ erfolgt.

Erfindungsgemäß besteht nun die Möglichkeit, mit einem einzigen Schaltelement 70, beispielsweise dem im Zusammenhang mit dem ersten Ausführungsbeispiel des erfindungsgemäßen Laserverstärkersystems beschriebenen akustooptischen Modulator 70, einerseits die Verluste so zu modulieren, daß eine Modenkopplung erfolgt und andererseits dann zu einem bestimmten Zeitpunkt tₖ den sich aufgebauten Laserpuls P" aus dem Strahlungsfeldsystem 14 auszukoppeln.

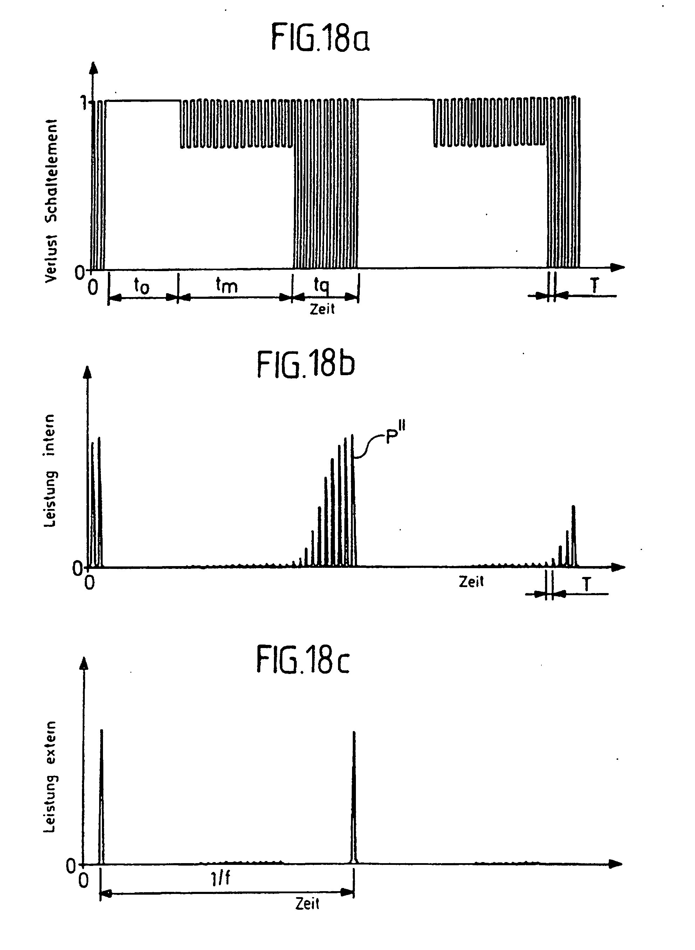

Bei einer fünften Betriebsweise des erfindungsgemäßen Laserverstärkersystems, dargestellt in Fig. 18 erfolgt eine Kombination von Modenkopplung, Cavitiy-Dumping und Güteschaltung.

Zunächst wird, wie in Fig. 18a dargestellt, während eines Zeitpunkts t₀ durch Güteschaltung jegliche Lasertätigkeit durch Erhöhen der Verluste mittels des Schaltelements 70 unterdrückt, um eine hohe Besetzungsinversionsdichte im laseraktiven Medium 10 zu erhalten.

Anschließend wird während eines Zeitraums tₘ eine Modulation der Verluste durchgeführt, um eine Modenkopplung der sich ausbildenden Moden zu erreichen, wobei durch nicht vollständige Reduktion der Verluste bei der Modulation kein sehr starker Abbau der Inversionsdichte erfolgt. Erst während des Zeitraums t_{q} erfolgt eine Modulation der Verluste bis zu minimalen Verlusten des Schaltelements 70, um einen Modengekoppelten umlaufenden Laserpuls P" während möglichst kurzer Zeit aufzubauen, wie in Fig. 18b dargestellt, der dann nach Ablauf des Zeitraums t_{q} dadurch ausgekoppelt wird, daß das Schaltelement 70 den Laserpuls P" umlenkt und somit für das Strahlungsfeldsystem 14 auf maximale Verluste schaltet, wie ein Vergleich der Fig. 18c mit Fig. 18a ergibt.

Auch diese Betriebsweise ist mit einem einzigen Schaltelement 70 möglich, welches vorzugsweise der im Zusammenhang mit dem ersten Ausführungsbeispiel in Fig. 1 beschriebene akustooptische Modulator ist, mit welchem sich die Verluste im Strahlungsfeldsystem 14 stufenlos über einen gewissen Bereich einstellen lassen, wobei allerdings dieser akustooptische Modulator nur dann einsetzbar ist, wenn - wie bereits erläutert - die Umlaufzeiten möglichst groß, das heißt im Bereich von Mikrosekunden oder mindestens 50 Nanosekunden, die sich bei dem erfindungsgemäßen Laserverstärkersystem problemlos erreichen lassen.

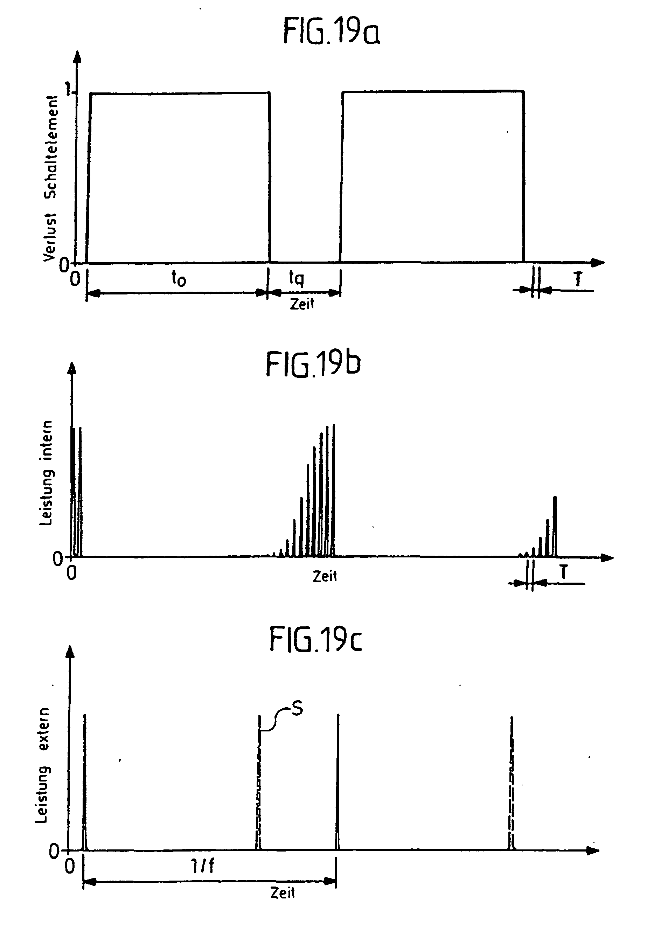

Bei einer sechsten Betriebsweise des erfindungsgemäßen Laserverstärkersystems, dargestellt in Fig. 19, wird das Laserverstärkersystem als regenerativer Verstärker betrieben.

Hierbei wird, wie in Fig. 19a dargestellt, zunächst während eines Zeitraums t₀ das Schaltelement 70 auf maximale Verluste geschaltet, so daß sich eine möglichst hohe Inversionsdichte im laseraktiven Medium 10 aufbaut. Nachfolgend wird ein, wie in Fig. 19c dargestellt, ein Seed-Laserpuls geringer Energie eingekoppelt, der dann, wie in Fig. 19b dargestellt, durch mehrfache Umläufe im erfindungsgemäßen Strahlungsfeldsystem 14 auf maximale Energie während des Zeitraums t_{q} verstärkt wird und anschließend nach Ende des Zeitraums t_{q} ausgekoppelt wird, wobei wiederum das Schaltelement 70 den Laserpuls ablenkt und damit auf maximale Verluste im Strahlungsfeldsystem 14 schaltet.

## Patentansprüche

1. Laserverstärkersystem umfassend
einen ein laseraktives Medium aufweisenden Festkörper (10),
ein durch eine Strahlungsfeldführungsoptik (12) festgelegtes Strahlungsfeldsystem (14) und ein im Strahlungsfeldsystem (14) angeordnetes aktiv schaltbares optisches Schaltelement (70) zum Beeinflussen der Verluste im Strahlungsfeldsystem (14),
**dadurch gekennzeichnet, daß** der Festkörper (10) plättchenförmig ausgebildet ist, das Strahlungsfeldsystem (14) einen einfallenden Ast (16) und einen ausfallenden Ast (18) umfaßt, die einerseits miteinander gekoppelt sind und zwischen denen andererseits ein Verstärkerstrahlungsfeld (20) vorgesehen ist, das aus einer Vielzahl von sich zwischen zwei optischen Strahlumkehrelementen (24, 26) erstreckenden Zwischenästen (22) gebildet ist, die ihrerseits alle den Festkörper (10) in Richtung quer zu seinen Flachseiten (56, 58) und innerhalb eines aktiven Volumenbereichs (52) durchsetzen, und daß der aktive Volumenbereich (52) in Richtungen quer zu Strahlachsen (32) der Zwischenäste (22) eine Ausdehnung aufweist, welche maximal einem Dreifachen der mittleren Ausdehnung der Strahlungsfeldquerschnitte (40) der im aktiven Volumenbereich (52) liegenden Volumenabschnitte (50) der Zwischenäste (22) entspricht.

2. Laserverstärkersystem nach Anspruch 1, **dadurch gekennzeichnet, daß** das aktiv schaltbare optische Schaltelement (70) außerhalb des Verstärkerstrahlungsfeldes (20) angeordnet ist.

3. Laserverstärkersystem nach Anspruch 2, **dadurch gekennzeichnet, daß** das aktiv schaltbare optische Schaltelement (70) im einfallenden (16) oder ausfallenden Ast (18) des Strahlungsfeldsystems (14) angeordnet ist.

4. Laserverstärkersystem nach einem der voranstehenden Ansprüche, **dadurch gekennzeichnet, daß** das Strahlungsfeldsystem (14) mindestens zwei Verstärkerstrahlungsfelder (20₁, 20₂) aufweist und jedem Verstärkerstrahlungsfeld (20₁, 20₂) zwei Strahlumkehrelemente (24, 26) zugeordnet sind.

5. Laserverstärkersystem nach Anspruch 4, **dadurch gekennzeichnet, daß** verschiedenen Verstärkerstrahlungsfelder (20₁, 20₂) verschiedene ein laseraktives Medium aufweisende Volumenbereich (20₁, 20₂) zugeordnet sind.

6. Laserverstärkersystem nach einem der voranstehenden Ansprüche, **dadurch gekennzeichnet, daß** jedem Verstärkerstrahlungsfeld (20) mindestens ein zwischen den Strahlumkehrelementen (24, 26) auf die Zwischenäste (22) wirkendes Übertragungselement (28) zugeordnet ist, welches die Zwischenäste (22) in einen Schnittbereich (30) abbildet, in welchem diese mit ihren Strahlungsfeldquerschnitten (40) mindestens zur Hälfte überlappen.

7. Laserverstärkersystem nach Anspruch 6, **dadurch gekennzeichnet, daß** das Übertragungselement (28) die Zwischenäste (22) reflektierend ausgebildet ist.

8. Laserverstärkersystem nach Anspruch 6 oder 7, **dadurch gekennzeichnet, daß** das Übertragungselement (28) als auf die Strahlachsen (32) der Zwischenäste (22) kollimierend wirkendes Übertragungselement ausgebildet ist.

9. Laserverstärkersystem nach Anspruch 6 oder 7, **dadurch gekennzeichnet, daß** das Übertragungselement (28) als die Strahlachsen (32) der Zwischenäste (22) zweifach in einem Schnittbereich zusammenführendes Übertragungselement ausgebildet ist.

10. Laserverstärkersystem nach einem der voranstehenden Ansprüche, **dadurch gekennzeichnet, daß** mindestens eines der Strahlumkehrelemente (24) als einfach reflektierender Reflektor ausgebildet ist.

11. Laserverstärkersystem nach Anspruch 10, **dadurch gekennzeichnet, daß** beide Strahlumkehrelemente (24, 26) als einfach reflektierende Reflektoren ausgebildet sind.

12. Laserverstärkersystem nach Anspruch 10 oder 11, **dadurch gekennzeichnet, daß** die Zwischenäste (22) auf dem Reflektor (24, 26) in einem Flächenbereich (30) mit ihren Strahlungsfeldquerschnitten (40) überlappend auftreffen.

13. Laserverstärkersystem nach einem der voranstehenden Ansprüche, **dadurch gekennzeichnet, daß** die Strahlungsfeldführungsoptik (12) derart ausgebildet ist, daß sich die Zwischenäste (22) mit ihren den aktiven Volumenbereich (52) durchsetzenden Volumenabschnitten (50) überlappen.

14. Laserverstärkersystem nach einem der voranstehenden Ansprüche, **dadurch gekennzeichnet, daß** die Strahlungsfeldführungsoptik (12) derart ausgebildet ist, daß die Zwischenäste (22) im aktiven Volumenbereich (52) jeweils eine näherungsweise ähnliche Strahlungsfeldgeometrie (40) aufweisen.

15. Laserverstärkersystem nach einem der voranstehenden Ansprüche, **dadurch gekennzeichnet, daß** die Strahlungsfeldführungsoptik (12) derart ausgebildet ist, daß die Strahlachsen (32) der Zwischenäste ein in einem den aktiven Volumenbereich (52) umfassenden Raumbereich (54) liegendes Schnittvolumen (34) durchsetzen, welches mindestens um einen Faktor Zehn kleiner als der aktive Volumenbereich (52) ist.

16. Laserverstärkersystem nach Anspruch 15, **dadurch gekennzeichnet, daß** der Raumbereich (54) in jeder Richtung maximal eine Ausdehnung aufweist, die dem Doppelten der maximalen Ausdehnung des aktiven Volumenbereichs (52) entspricht.

17. Laserverstärkersystem nach einem der voranstehenden Ansprüche, **dadurch gekennzeichnet, daß** der das laseraktive Medium aufweisende Festkörper (10) unmittelbar vor dem Strahlumkehrelement (24, 26) an geordnet ist, auf welchem sich die Zwischenäste (22) in dem Flächenbereich (30) mit ihren Strahlungsfeldquerschnitten (40) überlappen.

18. Laserverstärkersystem nach einem der voranstehenden Ansprüche, **dadurch gekennzeichnet, daß** die Strahlungsfeldführungsoptik (12) derart ausgebildet ist, daß die Zwischenäste (22) mit derselben Strahlausbreitungsrichtung innerhalb des aktiven Volumenbereichs (52) eine identische Symmetrie mit identischer Symmetrieausrichtung aufweisen.

19. Laserverstärkersystem nach einem der voranstehenden Ansprüche, **dadurch gekennzeichnet, daß** die Strahlungsfeldführungsoptik (12) derart ausgebildet ist, daß die Zwischenäste (22) mit ungefähr derselben Strahlausbreitungsrichtung in dem aktiven Volumenbereich (52) ungefähr dieselbe Phasenkrümmung aufweisen.

20. Laserverstärkersystem nach einem der voranstehenden Ansprüche, **dadurch gekennzeichnet, daß** die Strahlungsfeldführungsoptik (12) derart ausgebildet ist, daß Zwischenäste (22) mit ungefähr derselben Strahlausbreitungsrichtung in einem den aktiven Volumenbereich (52) umfassenden Raumbereich liegende konjugierte Flächen aufweisen.

21. Laserverstärkersystem nach Anspruch 20, **dadurch gekennzeichnet, daß** der Raumbereich in jeder Richtung eine maximale Ausdehnung aufweist, die dem Doppelten der maximalen Ausdehnung des aktiven Volumenbereichs (52) in dieser Richtung entspricht.

22. Laserverstärkersystem nach einem der voranstehenden Ansprüche, **dadurch gekennzeichnet, daß** die Strahlungsfeldführungsoptik (12) derart ausgebildet ist, daß sich für das Verstärkerstrahlungsfeld (20) bei einem Durchlauf vom aktiven Volumenbereich (52) durch einen Zwischenast (22) zurück zum aktiven Volumenbereich (52) mit gleicher Durchlaufrichtung ein weitgehendes afokales Systems ergibt.

23. Laserverstärkersystem nach einem der voranstehenden Ansprüche, **dadurch gekennzeichnet, daß** die Strahlungsfeldführungsoptik (12) derart ausgebildet ist, daß im Raumbereich (54) aus jedem der Zwischenäste (22) ein anderer Zwischenast (22) mit einem Abbildungsmaßstab von ungefähr eins gebildet wird.

24. Laserverstärkersystem nach einem der voranstehenden Ansprüche, **dadurch gekennzeichnet, daß** sich die Zahl der Zwischenäste (22) durch Justierung der das Verstärkerstrahlungsfeld (20) definierenden Elemente (24, 26, 28, 98) der Strahlungsfeldführungsoptik (12) relativ zueinander einstellen läßt.

25. Laserverstärkersystem nach Anspruch 24, **dadurch gekennzeichnet, daß** die Zahl der Zwischenäste (22) durch Justierung eines der Strahlumkehrelemente (26) relativ zu den anderen, stationär angeordneten Elementen (24, 28) der Strahlungsfeldführungsoptik (12) einstellbar ist.

26. Laserverstärkersystem nach einem der voranstehenden Ansprüche, **dadurch gekennzeichnet, daß** der einfallende Ast (16) sich zwischen einem Abschlußelement (62) der Strahlungsfeldführungsoptik (12) und einem der zwei Strahlumkehrelemente (24, 26) erstreckt.

27. Laserverstärkersystem nach einem der voranstehenden Ansprüche, **dadurch gekennzeichnet, daß** der ausfallende Ast (18) sich zwischen einem Abschlußelement (64) der Strahlungsfeldführungsoptik (12) und einem der zwei Strahlumkehrelemente (24, 26) erstreckt.

28. Laserverstärkersystem nach einem der voranstehenden Ansprüche, **dadurch gekennzeichnet, daß** sich der einfallende Ast (16) und der ausfallende Ast (18) zu demselben Strahlumkehrelement (24, 26) hin erstrecken.

29. Laserverstärkersystem nach einem der voranstehenden Ansprüche, **dadurch gekennzeichnet, daß** der einfallende Ast (16) und der ausfallende Ast (18) durch mindestens ein Abschlußelement (62, 64) direkt gekoppelt sind.

30. Laserverstärkersystem nach Anspruch 29, **dadurch gekennzeichnet, daß** das mindestens eine Abschlußelement (62, 64) den ausfallenden Ast (18) und den einfallenden Ast (16) durch Reflexion koppelt.

31. Laserverstärkersystem nach einem der voranstehenden Ansprüche, **dadurch gekennzeichnet, daß** das Strahlungsfeldsystem (14) so ausgebildet ist, daß Laserstrahlung das Strahlungsfeldsystem (14) in derselben Durchlaufrichtung mehrfach durchlaufen kann.

32. Laserverstärkersystem nach einem der Ansprüche 1 bis 30, **dadurch gekennzeichnet, daß** das Strahlungsfeldsystem (14) so ausgebildet ist, daß Laserstrahlung das Strahlungsfeldsystem (14) durch Richtungsumkehr im einfallenden (16) und/oder ausfallenden Ast (18) in entgegengesetzten Richtungen durchlaufen kann.

33. Laserverstärkersystem nach einem der voranstehenden Ansprüche, **dadurch gekennzeichnet, daß** das Strahlungsfeldsystem (14) so ausgebildet ist, daß es von Laserstrahlung beliebig oft durchlaufen werden kann.

34. Laserverstärkersystem nach einem der voranstehenden Ansprüche, **dadurch gekennzeichnet, daß** ein Teil der Laserstrahlung im Strahlungsfeldsystem (14) ständig auskoppelbar ist.

35. Laserverstärkersystem nach Anspruch 34, **dadurch gekennzeichnet, daß** Laserstrahlung durch ein Element (62, 63) der Strahlungsfeldführungsoptik (12) auskoppelbar ist.

36. Laserverstärkersystem nach einem der Ansprüche 1 bis 33, **dadurch gekennzeichnet, daß** Laserstrahlung das Strahlungsfeldsystem (14) so lange durchläuft, bis eine aktive Auskopplung durch das optische Schaltelement (70) erfolgt.

37. Laserverstärkersystem nach einem der Ansprüche 1 bis 33, **dadurch gekennzeichnet, daß** das aktiv schaltbare optische Schaltelement (70') ein polarisationsbeeinflussendes Schaltelement ist.

38. Laserverstärkersystem nach einem der Ansprüche 1 bis 33, **dadurch gekennzeichnet, daß** das aktiv schaltbare optische Schaltelement (70) ein strahlungsbeugendes Schaltelement ist.

39. Laserverstärkersystem nach Anspruch 38, **dadurch gekennzeichnet, daß** das aktiv schaltbare optische Schaltelement (70) ein akustooptischer Modulator ist.

40. Laserverstärkersystem nach einem der voranstehenden Ansprüche, **dadurch gekennzeichnet, daß** der Festkörper (10) über einer Flachseite (56) gekühlt ist.

41. Laserverstärkersystem nach einem der voranstehenden Ansprüche, **dadurch gekennzeichnet, daß** der Festkörper (10) mit einer Wärmesenke (23) gekoppelt ist.

## Claims

1. Laser amplifier system comprising
a solid-state member (10) having a laser-active medium,
a radiation field system (14) determined by an optical guide means (12) for the radiation field and an actively switchable optical switching element (70) arranged in the radiation field system (14) for influencing the losses in the radiation field system (14),
**characterized in that** the solid-state member (10) is designed like a thin plate, the radiation field system (14) comprises an incoming branch (16) and an outgoing branch (18), said branches being coupled to one another, on the one hand, and, on the other hand, an amplifier radiation field (20) being provided between them, said amplifier radiation field being formed from a plurality of intermediate branches (22) extending between two optical beam reversing elements (24, 26), said intermediate branches, for their part, all penetrating the solid-state member (10) in a direction transverse to its flat sides (56, 58) and within an active volume area (52), and that the active volume area (52) has in directions transverse to beam axes (32) of the intermediate branches (22) an extension corresponding at the most to three times the average extension of the radiation field cross sections (40) of the volume sections (50) of the intermediate branches (22) located in the active volume area (52).

2. Laser amplifier system as defined in claim 1, **characterized in that** the actively switchable optical switching element (70) is arranged outside the amplifier radiation field (20).

3. Laser amplifier system as defined in claim 2, **characterized in that** the actively switchable optical switching element (70) is arranged in the incoming (16) or outgoing branch (18) of the radiation field system (14).

4. Laser amplifier system as defined in any one of the preceding claims, **characterized in that** the radiation field system (14) has at least two amplifier radiation fields (20₁, 20₂) and two beam reversing elements (24, 26) are associated with each amplifier radiation field (20₁, 20₂).

5. Laser amplifier system as defined in claim 4, **characterized in that** different volume areas (10₁, 20₂) having a laser-active medium are associated with different amplifier radiation fields (20₁, 20₂).

6. Laser amplifier system as defined in any one of the preceding claims, **characterized in that** at least one transfer element (28) acting on the intermediate branches (22) between the beam reversing elements (24, 26) is associated with each amplifier radiation field (20), said transfer element imaging the intermediate branches (22) into an area of intersection (30), said branches overlapping with their radiation field cross sections (40) at least by half in said area of intersection.

7. Laser amplifier system as defined in claim 6, **characterized in that** the transfer element (28) is designed to reflect the intermediate branches (22).

8. Laser amplifier system as defined in claim 6 or 7, **characterized in that** the transfer element (28) is designed as a transfer element acting in a collimating manner on the beam axes (32) of the intermediate branches (22).

9. Laser amplifier system as defined in claim 6 or 7, **characterized in that** the transfer element (28) is designed as a transfer element bringing the beam axes (32) of the intermediate branches (22) together twice in an area of intersection.

10. Laser amplifier system as defined in any one of the preceding claims, **characterized in that** at least one of the beam reversing elements (24) is designed as a single-reflection reflector.

11. Laser amplifier system as defined in claim 10, **characterized in that** both beam reversing elements (24, 26) are designed as single-reflection reflectors.

12. Laser amplifier system as defined in claim 10 or 11, **characterized in that** the intermediate branches (22) impinge on the reflector (24, 26) in a surface area (30) with their radiation field cross sections (40) overlapping.

13. Laser amplifier system as defined in any one of the preceding claims, **characterized in that** the optical guide means (12) for the radiation field is designed in such a manner that the intermediate branches (22) overlap with their volume sections (50) penetrating the active volume area (52).

14. Laser amplifier system as defined in any one of the preceding claims, **characterized in that** the optical guide means (12) for the radiation field is designed in such a manner that the intermediate branches (22) each have an approximately similar radiation field geometry (40) in the active volume area (52).

15. Laser amplifier system as defined in any one of the preceding claims, **characterized in that** the optical guide means (12) for the radiation field is designed in such a manner that the beam axes (32) of the intermediate branches penetrate a volume of intersection (34) located in a spatial area (54) comprising the active volume area (52), said volume of intersection being smaller than the active volume area (52) by at least a factor of ten.

16. Laser amplifier system as defined in claim 15, **characterized in that** the spatial area (54) has in every direction at the most an extension corresponding to double the maximum extension of the active volume area (52).

17. Laser amplifier system as defined in any one of the preceding claims, **characterized in that** the solid-state member (10) having the laser-active medium is arranged immediately in front of the beam reversing element (24, 26), the intermediate branches (22) overlapping on said beam reversing element in the surface area (30) with their radiation field cross sections (40).

18. Laser amplifier system as defined in any one of the preceding claims, **characterized in that** the optical guide means (12) for the radiation field is designed in such a manner that the intermediate branches (22) with the same beam propagation direction have an identical symmetry with an identical alignment of symmetry within the active volume area (52).

19. Laser amplifier system as defined in any one of the preceding claims, **characterized in that** the optical guide means (12) for the radiation field is designed in such a manner that the intermediate branches (22) with approximately the same beam propagation direction have approximately the same phase curvature in the active volume area (52).

20. Laser amplifier system as defined in any one of the preceding claims, **characterized in that** the optical guide means (12) for the radiation field is designed in such a manner that intermediate branches (22) with approximately the same beam propagation direction have conjugated surfaces located in a spatial area comprising the active volume area (52).

21. Laser amplifier system as defined in claim 20, **characterized in that** the spatial area has in every direction a maximum extension corresponding to double the maximum extension of the active volume area (52) in this direction.

22. Laser amplifier system as defined in any one of the preceding claims, **characterized in that** the optical guide means (12) for the radiation field is designed in such a manner that a substantially afocal system results for the amplifier radiation field (20) in the case of a pass from the active volume area (52) through an intermediate branch (22) back to the active volume area (52) with the same direction of pass.

23. Laser amplifier system as defined in any one of the preceding claims, **characterized in that** the optical guide means (12) for the radiation field is designed in such a manner that a different intermediate branch (22) with an imaging magnification of approximately one is formed in the spatial area (54) from each of the intermediate branches (22).

24. Laser amplifier system as defined in any one of the preceding claims, **characterized in that** the number of intermediate branches (22) is adjustable due to adjustment relative to one another of the elements (24, 26, 28, 98) of the optical guide means (12) for the radiation field defining the amplifier radiation field (20).

25. Laser amplifier system as defined in claim 24, **characterized in that** the number of intermediate branches (22) is adjustable due to adjustment of one of the beam reversing elements (26) relative to the other, stationarily arranged elements (24, 28) of the optical guide means (12) for the radiation field.

26. Laser amplifier system as defined in any one of the preceding claims, **characterized in that** the incoming branch (16) extends between an end element (62) of the optical guide means (12) for the radiation field and one of the two beam reversing elements (24, 26).

27. Laser amplifier system as defined in any one of the preceding claims, **characterized in that** the outgoing branch (18) extends between an end element (64) of the optical guide means (12) for the radiation field and one of the two beam reversing elements (24, 26).

28. Laser amplifier system as defined in any one of the preceding claims, **characterized in that** the incoming branch (16) and the outgoing branch (18) extend towards the same beam reversing element (24, 26).

29. Laser amplifier system as defined in any one of the preceding claims, **characterized in that** the incoming branch (16) and the outgoing branch (18) are coupled directly by means of at least one end element (62, 64).

30. Laser amplifier system as defined in claim 29, **characterized in that** the at least one end element (62, 64) couples the outgoing branch (18) and the incoming branch (16) by way of reflection.

31. Laser amplifier system as defined in any one of the preceding claims, **characterized in that** the radiation field system (14) is designed such that laser radiation is able to pass through the radiation field system (14) several times in the same direction of pass.

32. Laser amplifier system as defined in any one of claims 1 to 30, **characterized in that** the radiation field system (14) is designed such that laser radiation is able to pass through the radiation field system (14) in opposite directions due to a reversal of direction in the incoming (16) and/or outgoing branch (18).

33. Laser amplifier system as defined in any one of the preceding, claims, **characterized in that** the radiation field system (14) is designed such that laser radiation is able to pass through it as often as required.

34. Laser amplifier system as defined in any one of the preceding claims, **characterized in that** part of the laser radiation is adapted to be constantly coupled out in the radiation field system (14).

35. Laser amplifier system as defined in claim 34, **characterized in that** laser radiation is adapted to be coupled out by an element (62, 63) of the optical guide means (12) for the radiation field.

36. Laser amplifier system as defined in any one of claims 1 to 33, **characterized in that** laser radiation passes through the radiation field system (14) for such a time until an active coupling out is brought about by means of the optical switching element (70).

37. Laser amplifier system as defined in any one of claims 1 to 33, **characterized in that** the actively switchable optical switching element (70') is a switching element influencing polarization.

38. Laser amplifier system as defined in any one of claims 1 to 33, **characterized in that** the actively switchable optical switching element (70) is a switching element diffracting radiation.

39. Laser amplifier system as defined in claim 38, **characterized in that** the actively switchable optical switching element (70) is an acousto-optical modulator.

40. Laser amplifier system as defined in any one of the preceding claims, **characterized in that** the solid-state member (10) is cooled via a flat side (56).

41. Laser amplifier system as defined in any one of the preceding claims, **characterized in that** the solid-state member (10) is coupled to a heat sink (23).

## Revendications

1. Système amplificateur de laser comprenant
un solide (10) comportant un milieu actif d'un laser,
un système de champ de rayonnement (14) déterminé par une optique de guidage de champ de rayonnement (12) et un élément de commutation (70) optique activement commutable disposé dans le système de champ de rayonnement (14) pour l'influence des pertes dans le système de champ de rayonnement (14),
**caractérisé en ce que** le solide (10) est configuré en forme de plaquette, le système de champ de rayonnement (14) comprend une branche incidente (16) et une branche émergente (18), qui sont d'une part couplées les unes aux autres et entre lesquelles est prévu d'autre part un champ de rayonnement amplificateur (20) qui est formé d'une multitude de branches intermédiaires (22) s'étendant entre deux éléments optiques d'inversion de faisceau (24, 26) qui traversent de leurs côtés le solide (10) dans le sens transversal à ses faces plates (56, 58) et à l'intérieur d'une zone de volume active (52), et **en ce que** la zone de volume active (52) comprend dans les sens transversaux aux axes de rayonnement (32) des branches intermédiaires (22) une expansion qui correspond au maximum au triple de l'expansion moyenne des sections transversales de champ de rayonnement (40) des segments de volume (50) situés dans la zone de volume active (52) des branches intermédiaires (22).

2. Système amplificateur de laser selon la revendication 1, **caractérisé en ce que** l'élément de commutation (70) optique activement commutable est disposé en dehors du champ de rayonnement amplificateur (20).

3. Système amplificateur de laser selon la revendication 2, **caractérisé en ce que** l'élément de commutation (70) optique activement commutable est disposé dans la branche incidente (16) ou la branche émergente (18) du système de champ de rayonnement (14).

4. Système amplificateur de laser selon l'une des revendications précédentes, **caractérisé en ce que** le système de champ de rayonnement (14) comprend au moins deux champs de rayonnement amplificateur (20₁, 20₂) et deux éléments d'inversion du faisceau (24, 26) sont attribués à chaque champ de rayonnement amplificateur (20₁, 20₂).

5. Système amplificateur de laser selon la revendication 4, **caractérisé en ce que** différentes zones de volume (10₁, 20₂) comprenant un milieu actif d'un laser sont attribuées à différents champs de rayonnement amplificateur (20₁, 20₂).

6. Système amplificateur de laser selon l'une des revendications précédentes, **caractérisé en ce que** au moins un élément de transmission (28) agissant entre les éléments d'inversion de faisceau (24, 26) sur les branches intermédiaires (22) est attribué à chaque champ de rayonnement amplificateur (20), l'élément de transmission représentant les branches intermédiaires (22) dans une zone de coupe (30) dans laquelle au moins jusqu'à la moitié celles-ci recouvrent de leurs sections transversales de champ de rayonnement (40).

7. Système amplificateur de laser selon la revendication 6, **caractérisé en ce que** l'élément de transmission (28) est configuré en réfléchissant les branches intermédiaires (22).

8. Système amplificateur de laser selon la revendication 6 ou 7, **caractérisé en ce que** l'élément de transmission (28) est configuré comme élément de transmission agissant comme collimateur sur les axes de faisceau (32) des branches intermédiaires (22).

9. Système amplificateur de laser selon la revendication 6 ou 7, **caractérisé en ce que** l'élément de transmission (28) est configuré comme élément de transmission réunissant les axes de faisceau (32) des branches intermédiaires (22) en double dans une zone de coupe.

10. Système amplificateur de laser selon l'une des revendications précédentes, **caractérisé en ce que** au moins un des éléments d'inversion de faisceau (24) est configuré comme un réflecteur simplement réfléchissant.

11. Système amplificateur de laser selon la revendication 10, **caractérisé en ce que** les deux éléments d'inversion de faisceau (24, 26) sont configurés comme des réflecteurs simplement réfléchissants.

12. Système amplificateur de laser selon la revendication 10 ou 11, **caractérisé en ce que** les branches intermédiaires (22) sont incidentes par recouvrement sur le réflecteur (24, 26) dans une zone de surfaces (30) avec leurs sections transversales de champ de rayonnement (40).

13. Système amplificateur de laser selon l'une des revendications précédentes, **caractérisé en ce que** l'optique de guidage de champ de rayonnement (12) est configurée de telle sorte que les branches intermédiaires (22) se recouvrent de leurs sections de volume (50) traversant la zone de volume active (52).

14. Système amplificateur de laser selon l'une des revendications précédentes, **caractérisé en ce que** l'optique de guidage de champ de rayonnement (12) est configurée de telle sorte que les branches intermédiaires (22) présentent dans la zone de volume active (52) respectivement une géométrie de champ de rayonnement (40) approximativement semblable.

15. Système amplificateur de laser selon l'une des revendications précédentes, **caractérisé en ce que** l'optique de guidage de champ de rayonnement (12) est configurée de telle sorte que les axes de faisceau (32) des branches intermédiaires parcourent un volume de coupe (34) situé dans une zone spatiale (54) entourant la zone de volume active (52), le volume de coupe étant au moins d'un facteur de dix plus petit que la zone de volume active (52).

16. Système amplificateur de laser selon la revendication 15, **caractérisé en ce que** la zone spatiale (54) présente dans chaque direction au maximum une expansion correspondant au double de l'expansion maximale de la zone de volume active (52).

17. Système amplificateur de laser selon l'une des revendications précédentes, **caractérisé en ce que** le solide (10) comportant le milieu actif dans le laser est disposé directement devant l'élément d'inversion de faisceau (24, 26) sur lequel se chevauchent les branches intermédiaires (22) dans la zone de surface (30) de leurs sections transversales de champ de rayonnement (40).

18. Système amplificateur de laser selon l'une des revendications précédentes, **caractérisé en ce que** l'optique de guidage de champ de rayonnement (12) est configurée de telle sorte que les branches intermédiaires (22) avec le même sens de propagation du faisceau dans la zone de volume active (52) présentent une symétrie identique avec alignement de symétrie identique.

19. Système amplificateur de laser selon l'une des revendications précédentes, **caractérisé en ce que** l'optique de guidage du champ de rayonnement (12) est configurée de telle sorte que les branches intermédiaires (22) avec environ le même sens de propagation du faisceau dans la zone de volume active (52) présentent environ la même courbure de phase.

20. Système amplificateur de laser selon l'une des revendications précédentes, **caractérisé en ce que** l'optique de guidage du champ de rayonnement (12) est configurée de telle sorte que les branches intermédiaires (22) avec environ le même sens de propagation du faisceau présentent des surfaces conjuguées situées dans une zone spatiale entourant la zone de volume active (52).

21. Système amplificateur de laser selon la revendication 20, **caractérisé en ce que** la zone spatiale présente dans chaque direction une expansion maximale qui correspond dans ce sens au double de l'expansion maximale de la zone de volume active (52).

22. Système amplificateur selon l'une des revendications précédentes, **caractérisé en ce que** l'optique de guidage de champ de rayonnement (12) est configurée de telle sorte qu'un système largement afocal existe pour le champ de rayonnement amplificateur (20) lors d'un passage de la zone de volume active (52) via une branche intermédiaire (22) pour revenir à la zone de volume active (52) avec le même sens de passage.

23. Système amplificateur de laser selon l'une des revendications précédentes, **caractérisé en ce que** l'optique de guidage du rayonnement (12) est configurée de telle sorte que dans la zone spatiale (54) une autre branche intermédiaire (22) avec une échelle de représentation d'environ un est formée à partir de chacune des branches intermédiaires (22).

24. Système amplificateur de laser selon l'une des revendications précédentes, **caractérisé en ce que** le nombre des branches intermédiaires (22) peut être ajusté réciproquement par l'alignement des éléments (24, 26, 28, 98) définissant le champ de rayonnement amplificateur (20) de l'optique de guidage de champ de rayonnement (12).

25. Système amplificateur de laser selon la revendication 24, **caractérisé en ce que** le nombre de branches intermédiaires (22) est réglable par l'alignement d'un des éléments d'inversion du faisceau (26) par rapport aux autres éléments (24, 28), disposés de façon stationnaire, de l'optique de guidage de champ de rayonnement (12).

26. Système amplificateur de laser selon l'une des revendications précédentes, **caractérisé en ce que** la branche incidente (16) s'étend entre un élément de fermeture (62) de l'optique de guidage de champ de rayonnement (12) et un des deux éléments d'inversion du faisceau (24, 26).

27. Système amplificateur de laser selon l'une des revendications précédentes, **caractérisé en ce que** la branche émergente (18) s'étend entre un élément de fermeture (64) de l'optique de guidage de champ de rayonnement (12) et un des deux éléments d'inversion du faisceau (24, 26).

28. Système amplificateur de laser selon l'une des revendications précédentes, **caractérisé en ce que** la branche incidente (16) et la branche émergente (18) s'étendent vers le même élément d'inversion de faisceau (24, 26).

29. Système amplificateur de laser selon l'une des revendications précédentes, **caractérisé en ce que** la branche incidente (16) et la branche émergente (18) sont couplées directement par au moins un élément de fermeture (62, 64).

30. Système amplificateur de laser selon la revendication 29, **caractérisé en ce que** au moins un élément de fermeture (62, 64) couple par réflexion la branche émergente (18) et la branche incidente (16).

31. Système amplificateur de laser selon l'une des revendications précédentes, **caractérisé en ce que** le système de champ de rayonnement (14) est configuré de telle sorte que le rayonnement laser peut parcourir plusieurs fois le système de champ de rayonnement (14) dans le même sens de passage.

32. Système amplificateur de laser selon l'une des revendications 1 à 30, **caractérisé en ce que** le système de champ de rayonnement (14) est configuré de sorte que le rayonnement laser peut parcourir le système de champ de rayonnement (14) par l'inversion de sens dans la branche incidente (16) et/ou la branche émergente (18) dans des directions opposées.

33. Système amplificateur de laser selon l'une des revendications précédentes, **caractérisé en ce que** le système de champ de rayonnement (14) est configuré de telle sorte qu'il peut être parcouru plus ou moins souvent par le rayonnement laser.

34. Système amplificateur de laser selon l'une des revendications précédentes, **caractérisé en ce qu'**une partie du rayonnement laser peut être déclenchée en permanence dans le système de champ de rayonnement (14).

35. Système amplificateur de laser selon la revendication 34, **caractérisé en ce que** le rayonnement laser peut être déclenché par un élément (62, 63) de l'optique de guidage de champ de rayonnement (12).

36. Système amplificateur de laser selon l'une des revendications 1 à 33, **caractérisé en ce que** le rayonnement laser parcourt le système de champ de rayonnement (14) jusqu'à ce qu'un déclenchement actif ait lieu par l'élément de commutation optique (70).

37. Système amplificateur de laser selon l'une des revendications 1 à 33, **caractérisé en ce que** l'élément de commutation (70') optique activement commutable est un élément de commutation influençant la polarisation.

38. Système amplificateur de laser selon l'une des revendications 1 à 33 **caractérisé en ce que** l'élément de commutation (70) optique activement commutable est un élément de commutation diffractif au rayonnement.

39. Système amplificateur de laser selon la revendication 38, **caractérisé en ce que** l'élément de commutation (70) optique activement commutable est un modulateur acousto-optique.

40. Système amplificateur de laser selon l'une des revendications précédentes, **caractérisé en ce que** le solide (10) est refroidi par une face plate (56).

41. Système amplificateur de laser selon l'une des revendications précédentes, **caractérisé en ce que** le solide (10) est couplé à un dissipateur thermique (23).
